(19) Europäisches Patentamt
European Patent Office
Office européen des brevets

(11) **EP 1 919 097 B1**

(12) **EUROPEAN PATENT SPECIFICATION**

(45) Date of publication and mention
of the grant of the patent:
**06.01.2010 Bulletin 2010/01**

(51) Int Cl.:
***H04B 7/06*** (2006.01)

(21) Application number: **06022648.7**

(22) Date of filing: **30.10.2006**

(54) **Codebook generator, codebook and method for generating update matrices to be used in a precoding scheme with MIMO transmission**

Codebuch-Generator, Codebuch sowie Verfahren zum Erzeugen von Update-Matrizen für Vorcodierung mit MIMO-Übertragung

Générateur de table de codage, table de codage et procédé de génération de matrices de mise à jour pour un précodage avec une transmission de type MIMO

(84) Designated Contracting States:
**DE GB**

(43) Date of publication of application:
**07.05.2008 Bulletin 2008/19**

(73) Proprietor: **NTT DoCoMo, Inc.**
**Chiyoda-ku**
**Tokyo 100-6150 (JP)**

(72) Inventor: **Abe, Tetsushi**
**80538 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**WO-A-2006/075220**

- **JINHO CHOI ET AL: "An Adaptive Technique for Transmit Antenna Diversity With Feedback" IEEE TRANSACTIONS ON VEHICULAR TECHNOLOGY, IEEE SERVICE CENTER, PISCATAWAY, NJ, US, vol. 51, no. 4, July 2002 (2002-07), XP011080668 ISSN: 0018-9545**

**Description**

The present invention is in the field of multiple-input-multiple-output (MIMO) transmission as it is more and more used in mobile communication scenarios and as considered for future mobile communication systems.

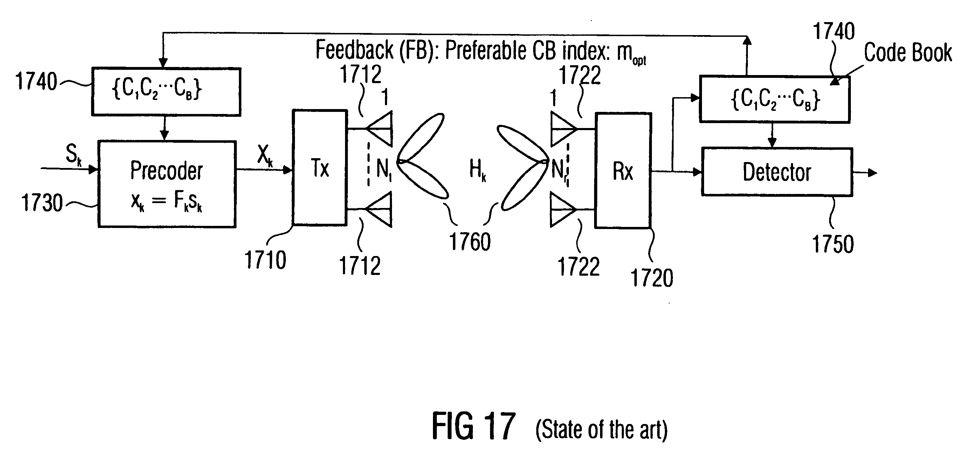

MIMO-systems in general can significantly improve system capacity of mobile communication systems. This is for example achieved as MIMO-systems can simultaneously transmit and receive multiple data streams using multiple transmit and receive antennas. Fig. 17 shows a general MIMO-system 1700. The scenario shows a transmit unit 1710 utilizing $N_t$ transmit antennas 1712. The signals transmitted by the transmit antennas 1712 are received by a receiver unit 1720 utilizing $N_r$ receive antennas 1722. Between the transmit antennas 1712 and the receive antennas 1722 there is a mobile radio channel, which is labeled with k in Fig. 17. The signals which are transmitted by the transmit unit 1710 are labeled $\mathbf{X}_k$ and are precoded by a precoding unit 1730. The precoding unit 1730 applies a precoding matrix $\mathbf{F}_k$ to the actual data streams $\mathbf{S}_k$ which are to be transmitted.

The precoding matrix $F_k$ is based on a feedback received from the receiver side, which preferably uses a codebook in order to feed back an index $m_{opt}$. In the scenario depicted in Fig. 17 these indices are determined from a codebook 1740, which is available on the transmitter and on the receiver side. The received signals are detected by a detector 1750 on the receiver side, which carries out channel estimation, i.e. the channel $\mathbf{H}_k$ is estimated, a precoding evaluated based on the channel estimate, coded according to the available codebook 1740 and the index of the respective codebook is provided to the transmitter. Fig. 17 therefore shows a MIMO-system with a codebook based precoding scheme. MIMO-precoding schemes can transmit multiple data streams via multiple beams 1760 and can thus increase the system capacity.

Feeding back complete channel information from the receiver makes it possible to conduct perfect precoding at a transmitter, however this requires high amounts of feedback information, i.e. signaling channels from the receiver to the transmitter, which utilize high data rates for detailed feedback information. Therefore, the reduction of the amount of the feedback is a major challenge in the field of MIMO-systems with codebook based precoding. Codebook based linear precoding requires only transmission of the preferable index of the predetermined codebook set as feedback information and requires therewith less feedback information.

Referring to Fig. 17, where the numbers of transmit and receive antennas are $N_t$ and $N_r$, and the number of simultaneously transmitted streams is $N_s$, the transmitted signal vector at time k can be written as

$$\mathbf{x}_k = \begin{bmatrix} x_1 \\ \vdots \\ x_{N_t} \end{bmatrix} = \begin{bmatrix} f_{11} & \cdots & f_{1N_s} \\ \vdots & \ddots & \vdots \\ f_{N_t,1} & \cdots & f_{N_t,N_s} \end{bmatrix} \begin{bmatrix} s_1 \\ \vdots \\ s_{N_s} \end{bmatrix} \equiv \mathbf{F}_k \mathbf{s}_k, \tag{1}$$

where the precoding matrix $\mathbf{F_k}$ is computed from the elements of the codebook. In equation 1 the MIMO-channel $\mathbf{H_k}$ can be defined as

$$\mathbf{H}_k \equiv \begin{bmatrix} h_{11} & \cdots & h_{1N_t} \\ \vdots & \ddots & \vdots \\ h_{N_r,1} & \cdots & h_{N_r,N_t} \end{bmatrix}. \tag{2}$$

Design concepts of codebooks are classified either as "one-shot codebook" or "tracking codebook". The main difference between the two codebook design concepts are described in the following Table 1.

Table 1:

| Type | Description |
|---|---|
| One-shot CB | A current precoding matrix is <u>independent of</u> the previous one. |

(continued)

| Type | Description |
|---|---|
| **Tracking CB** | A current precoding matrix depends on the previous one. |

In case of one-shot codebooks each element of the codebook can be matrix or vector. The former is called matrix codebook and the latter is called vector codebook. In case of tracking codebooks conventional systems use vector codebooks with mostly recursive transmission algorithms as further detailed below.

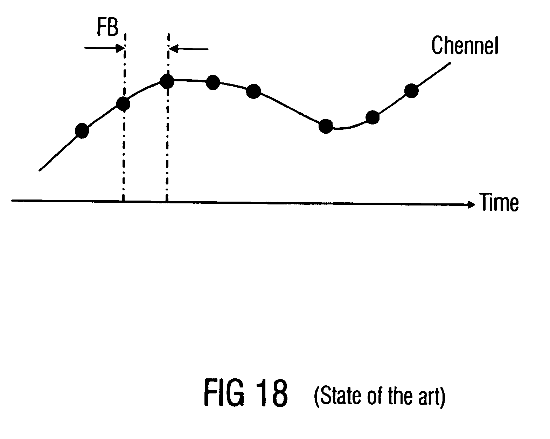

Fig. 18 shows a viewgraph of a channel coefficient of a mobile radio channel over a time axis. It is supposed that feedback is provided and channel samples taken in equidistant time periods, indicated in Fig. 18 by black dots. From the sampling points in Fig. 18 it can be seen that between two channel estimates and feedback periods the channel changes by a certain degree, which depends e.g. on the mobility within the communication scenario. In dependence on this change, the design concept of a codebook is chosen. If the channel changes are small, then the channel can be tracked, and a tracking codebook would be preferable. If the changes are rather high, then the one-shot codebook is preferable. In a practical wireless communication scenario, channels between two sample points can be correlated due to e.g. slow fading or a fast sampling frequency, which can be equivalent to a short feedback period. In this case a tracking codebook can offer a better trade-off between performance and required feedback bits, i.e. the required data rate on the feedback channel.

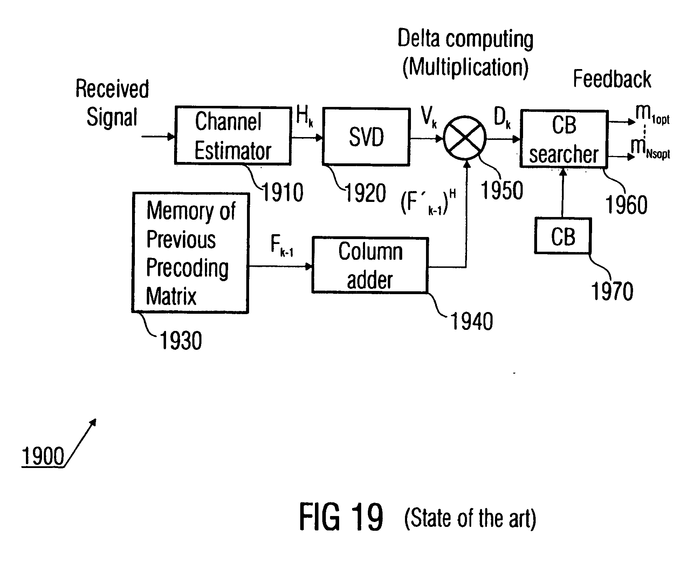

In the following an example system will be considered utilizing $N_t=4$ transmit antennas, $N_r=2$ receive antennas, and $N_s=2$ data streams. Furthermore throughout this description k denotes a time index. Fig. 19 shows a conventional receiver structure 1900. The conventional receiver 1900 comprises a channel estimator 1910 to which a received signal is provided. The channel estimator 1910 estimates the radio channel on the basis of reference symbols and provides a channel estimate $\mathbf{H_k}$ to a processing unit 1920, which carries out a singular value decomposition, yielding a unitary matrix $\mathbf{v_k}$, according to

$$\underset{\text{Current channel}}{\mathbf{H}_k = \begin{bmatrix} h_{11} & h_{12} & h_{13} & h_{14} \\ h_{21} & h_{22} & h_{23} & h_{24} \end{bmatrix}} \quad \overset{\text{SVD}}{\underset{\mathbf{H}_k = \mathbf{U}_k \mathbf{\Lambda}_k \mathbf{V}_k^H}{\Longrightarrow}} \quad \mathbf{V}_k = \begin{bmatrix} v_{11} & v_{12} \\ v_{21} & v_{22} \\ v_{31} & v_{32} \\ v_{41} & v_{42} \end{bmatrix} \quad . \quad (3)$$

The receiver 1900 further comprises a memory 1930 where a previous precoding matrix $\mathbf{F_{k-1}}$ is stored.

The receiver 1900 further comprises a column adder 1940 for adding a column to the previous precoding matrix $\mathbf{F_{k-1}}$ yielding $(\mathbf{F'_{k-1}})^H$, according to

$$\mathbf{F}_{k-1} = \begin{bmatrix} f_{11} & f_{12} \\ f_{21} & f_{22} \\ f_{31} & f_{32} \\ f_{41} & f_{42} \end{bmatrix} \quad \overset{\text{Colum adding}}{\Longrightarrow} \quad \mathbf{F}'_{k-1} = \begin{bmatrix} f_{11} & f_{12} & \boxed{f_{13}} & \boxed{f_{14}} \\ f_{21} & f_{22} & f_{23} & f_{24} \\ f_{31} & f_{32} & f_{33} & f_{34} \\ f_{41} & f_{42} & f_{43} & f_{44} \end{bmatrix} \quad (4)$$

$$\underset{\text{Dummy}}{\uparrow}$$

Equation 4 shows, that the column adder 1940 adds dummy columns to the previous precoding matrix $\mathbf{F_{k-1}}$. In order to compute a delta matrix the outcome of the column adder 1940 and the processing unit 1920 are multiplied in a multiplier 1950, which delivers a delta matrix $\mathbf{D_k}$, which in turn is input into a codebook searcher 1960, according to

$$\mathbf{D}_k = \mathbf{F}_{k-1}^{\prime H}\mathbf{V}_k \qquad \Longrightarrow \qquad \mathbf{D}_k = \begin{bmatrix} d_{11} & d_{12} \\ d_{21} & d_{22} \\ d_{31} & d_{23} \\ d_{41} & d_{24} \end{bmatrix} \qquad\qquad (5)$$

The codebook searcher 1960 uses a codebook 1970 to encode the delta matrix $\mathbf{D}_k$ and delivers indices $m_{1opt}...m_{N_{sopt}}$ as indices for the vector codebook 1970, according to

$$\mathbf{D}_k = \begin{bmatrix} d_{11} & d_{12} \\ d_{21} & d_{22} \\ d_{31} & d_{23} \\ d_{41} & d_{24} \end{bmatrix} \begin{array}{c} \mathbf{D}_2 = \mathbf{Q}_1\mathbf{D}_1 \\ \Longrightarrow \end{array} \begin{bmatrix} e^{j\theta} & \varepsilon \\ \varepsilon & d'_{22} \\ \varepsilon & d'_{23} \\ \varepsilon & d'_{24} \end{bmatrix} \qquad \begin{array}{l} \mathbf{Q}_1 = \mathbf{I} - \dfrac{2}{\|\mathbf{w}_1\|^2}\mathbf{w}_1\mathbf{w}_1^H \\[8pt] with \;\; \mathbf{w}_1 = \mathbf{c}_{m_{1opt}} - [1\,0...0]^T \end{array} \;\; . (6)$$

$$\mathbf{C}_{m_{1opt}} \blacktriangleright \text{Feedback} \qquad\qquad \mathbf{C}_{m_{2opt}} \blacktriangleright \text{Feedback}$$

As can be seen from equation 6 the delta matrix $\mathbf{D}_k$ is coded column wise. So the first column is taken and an appropriate matching vector is searched in the codebook 1970, upon which the matrix can be reduced by one dimension utilizing a householder function $\mathbf{Q}_n$ as given in equation 6. With the reduced matrix the next column comprises one dimension less than the first column, thus requiring less feedback. More details on the receiver structure and the mathematical background can be found in R1-060868, Intel, "Performance and complexity of scaleable Precoded MIMO (LLS & SLS),"3GPP RAN1 LTE, Mar 2006.

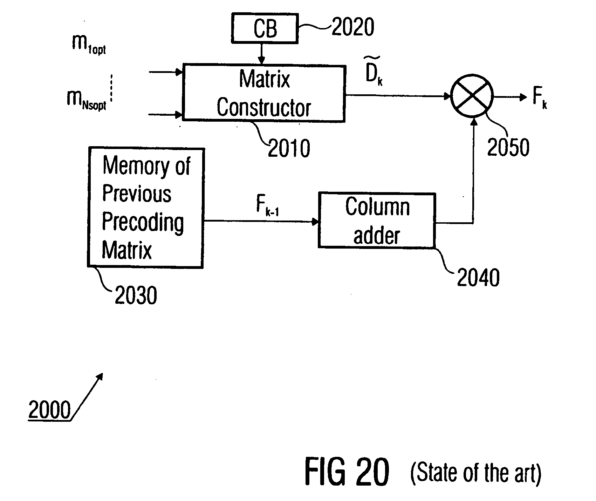

Fig. 20 displays a block diagram of a respective transmitter 2000. The transmitter 2000 comprises a matrix constructor 2010, which receives the codebook indices $m_{1opt}...m_{N_{sops}}$. The matrix constructor 2010 is coupled to codebook 2020 which is the same codebook as used on the receiver side. Using a recursive algorithm, the matrix constructor constructs an estimate $\widetilde{\mathbf{D}}_k$ for the respective delta matrix $\mathbf{D}_k$ from the codebook indices, according to

$$\begin{bmatrix} 1 & 0 \\ 0 & \\ 0 & \mathbf{C}_{m_{2opt}} \\ 0 & \end{bmatrix} \begin{array}{c} \mathbf{Q}_1 \times \\ \Longrightarrow \end{array} \begin{bmatrix} d'_{11} & d'_{12} \\ d'_{21} & d'_{22} \\ d'_{31} & d'_{32} \\ d'_{41} & d'_{42} \end{bmatrix} \equiv \widetilde{\mathbf{D}}_k \qquad . \qquad (7)$$

The transmitter 2000 further comprises a memory 2030 with the stored previous precoding matrix $\mathbf{F}_{k-1}$ to which a column adder 2040 adds dummy columns according to

$$\mathbf{F}_{k-1} = \begin{bmatrix} f_{11} & f_{12} \\ f_{21} & f_{22} \\ f_{31} & f_{32} \\ f_{41} & f_{42} \end{bmatrix} \quad \overset{\text{column add}}{\Longrightarrow} \quad \mathbf{F}'_{k-1} = \begin{bmatrix} f_{11} & f_{12} & \overset{\text{Dummy}}{\begin{bmatrix} f_{13} & f_{14} \\ f_{23} & f_{24} \\ f_{33} & f_{34} \\ f_{43} & f_{44} \end{bmatrix}} \\ f_{21} & f_{22} \\ f_{31} & f_{32} \\ f_{41} & f_{42} \end{bmatrix} \quad , (8)$$

A multiplier 2050 then multiplies the column added previous precoding matrix and the estimated delta matrix to obtain a new precoding matrix, which can then be applied to the data streams s in order to obtain the transmit signals x, according to

$$\mathbf{F}_k = \begin{bmatrix} f'_{11} & f'_{12} \\ f'_{21} & f'_{22} \\ f'_{31} & f'_{32} \\ f'_{41} & f'_{42} \end{bmatrix} = \mathbf{F}'_{k-1}\widetilde{\mathbf{D}}_k \quad \Longrightarrow \quad \mathbf{x} = \mathbf{F}_k\mathbf{s} \quad . \quad (9)$$

Alternatively, the above equation can also be amended as follows:

$$\mathbf{x} = \mathbf{F}_k\mathbf{P}\mathbf{s}$$

In this equation, P is the Ns x Ns power allocation matrix.
The conventional transmitter 2000 and the conventional receiver 1900 use the same codebooks 2020 respectively 1970, which is comprised of vectors of a different length, performing the recursive delta matrix coding algorithm. Equation 10 describes a codebook **CB** in more detail,

$$\mathbf{CB}: \{\mathbf{C}_1 \dots \mathbf{C}_B\}$$
$$\mathbf{C}_m (m=1,\dots,B) : N_t \times 1 \text{vector (for } m_1)$$
$$(N_t-1) \times 1 \text{vector (for } m_2)$$
$$. (10)$$

More details on the transmitter structure and the mathematical background can be found in R1-060868, Intel, "Performance and complexity of scaleable precoded MIMO (LLS & SLS)", 3GPP RAN1 LTE, Mar 2006.
The Figs. 19 and 20 show a receiver 1900 and a transmitter 2000 of a conventional precoding scheme with tracking capability where the current precoding matrix is updated using the previous one. The conventional scheme has the disadvantage that a column adder is required in order to adjust the size of the matrices. This is due to the fact that a precoding matrix is updated by multiplying the previous precoding matrix from the left hand side according to

$$\mathbf{F}_k = \mathbf{F}'_{k-1}\widetilde{\mathbf{D}}_k \quad . \quad (11)$$

The number of added columns or dummy columns depends on the number of transmitted data streams. Moreover, the conventional scheme has the disadvantage that a matrix constructor 2010 is required on the transmitter side in order to form $\tilde{\mathbf{D}}_k$ from the feedback indices. This is owing to the fact that in the conventional scheme multiple indices are fed back due to the use of a vector codebook, where the multiple indices also provide a disadvantage that more feedback bits or a higher feedback data rate is required. Furthermore, the conventional scheme provides the disadvantage that a processing unit 1920 is required in order to carry out a singular value decomposition. The singular value decomposition is a complex mathematical operation, which requires extra processing power on the receiver side. Overall the conventional system has the disadvantage that a high hardware and software complexity is required in order to implement the precoding scheme.

WO 2006/075220 A1 discloses a method of deriving a codebook including deriving a first codebook in Euclidean coordinates, transforming the first codeword into eigen-coordinates, applying Hochwald construction to the first codeword in eigen-coordinates to derive a plurality of codewords in eigen-coordinates and transforming the plurality of codewords in eigen-coordinates into a plurality of codewords in Euclidean coordinates to form the codebook.

Jinho Choi et al in "An Adaptive Technique for Transmit Antenna Diversity With Feedback", IEEE Transactions on Vehicular Technology, Vol. 51, no. 4, July 2002 discloses a method for closed-loop transmit diversity. They propose an adaptive technique for transmit diversity with feedback. It is shown that a proposed adaptive technique can efficiently increase the number of transmit antennas without significantly increasing the feedback rate under ideal conditions. As a result, the number of transmit antennas may be increased, resulting in a performance improvement. The proposed adaptive technique suffers from general variation and error propagation due to feedback errors. The use of the adaptive technique may, therefore, be limited to indoor communications and to pedestrian scenarios with reliable feedback channels.

It is the object of the present invention to provide a more efficient concept for generating a tracking matrix code book for a precoding scheme in a transmission system enabling higher system and link capacity.

The object is achieved by a code book generator apparatus according to claim 1, a method for generating a plurality of update matrices according to claim 20, a code book according to claim 22, and a storage medium having a code book stored thereon according to claim 23.

The present invention is based on the finding that tracking code books comprising update matrices enabling a precoding scheme in a MIMO transmission can be efficiently generated, on the basis of combining correlated matrices. The matrices can be generated to be unitary and random, for example a singular value decomposition can be used to generate unitary random matrices from arbitrary random matrices for the codebook of update matrices to have tracking capability. The code books can efficiently be generated using the inventive code book generator apparatus or the inventive method for generating a plurality of update matrices to be stored in a code book, and can then be stored on a storage medium in a transmitter and a receiver. The correlated first and second matrices can be efficiently generated by utilizing time shifted matrices of a random generator with a coherence time, respectively by first generating independent matrices, and correlating the second matrix with the first matrix for example by utilizing a filter, for example a forgetting filter. The present invention further provides the advantage that codebooks comprising update matrices for precoding schemes and MIMO transmissions can be created efficiently while providing tracking capability at same time.

Embodiments of the present invention will be detailed using the figures attached, in which

Fig. 1 shows an embodiment of a receiver apparatus;

Fig. 2 shows another embodiment of a receiver apparatus;

Fig. 3 shows an embodiment of a transmitter apparatus;

Fig. 4 shows another embodiment of a transmitter apparatus;

Fig. 5 shows an embodiment of a MIMO transmission system;

Fig. 6 shows an embodiment of a codebook generator apparatus;

Fig. 7 shows an embodiment of a method for generating a plurality of update matrices;

Fig. 8a shows a pseudo code of an embodiment of a method for generating a plurality of update matrices;

Fig. 8b shows a viewgraph illustrating achievable capacity improvements with a respective embodiment.

Fig. 9 shows another embodiment of a receiver apparatus;

Fig. 10 shows another embodiment of a receiver apparatus;

Fig. 11        shows another embodiment of a transmitter apparatus;

Fig. 12        shows another embodiment of a transmitter apparatus;

Fig. 13        shows an embodiment of a method for updating precoding information with absolute and differential precoding update information;

Fig. 14        shows an embodiment of a method for providing precoding information;

Fig. 15        shows a viewgraph illustrating achievable capacity improvements with a respective embodiment;

Fig. 16a       shows simulation results illustrating the capacity improvements of respective embodiments;

Fig. 16b       shows simulation results illustrating the capacity improvements over an average signal-to-noise-ratio achievable with respective embodiments.

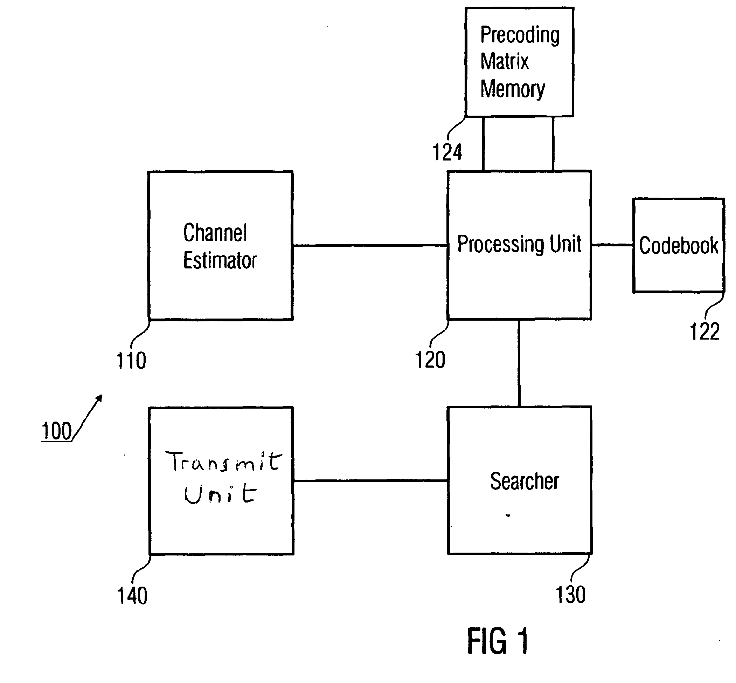

Fig. 1 shows an embodiment of a receiver apparatus 100. The receiver apparatus 100 is comprised of channel estimator 110, which is coupled with a processing unit 120. The processing unit 120 is coupled with a codebook 122, a precoding matrix memory 124 and a searcher 130. The searcher 130 is coupled with a transmit unit 140. The receiver apparatus 100 is adapted for controlling a precoding operation in a transmitter within a transmission scheme having a first number of transmit antennas and a second number of receive antennas, the first number being larger than one and the second number being larger or equal to one. The receiver apparatus 100 comprises the channel estimator 110 for estimating a radio channel between the transmitter and the receiver apparatus 100 based on a received signal to determine a radio channel estimate.

The receiver apparatus 100 further comprises the processing unit 120 providing possible new matrices based on update matrices stored in an update matrices codebook 122 and an old precoding matrix stored in the precoding matrix memory 124, an update matrix may have at least two rows and at least two columns. Generally, the processing unit is for providing possible new precoding matrices based on update information items stored in an update codebook and an old precoding matrix. Preferably, the update codebook includes, as update information items, update matrices, and in which an update matrix includes at least two rows and at least two columns.

The receiver apparatus 100 further comprises the searcher 130 for searching a new precoding matrix fulfilling an optimization criteria based on the radio channel estimate among the possible new precoding matrices and a transmit unit 140 for transmitting an update matrix index, which is associated with the new precoding matrix found when searching the new precoding matrices.

In one embodiment the second number of receive antennas is larger than one and a precoding matrix having at least two rows and at least two columns. The processing unit may be adapted for providing a new possible precoding matrices by multiplication, the multiplication having an update matrix and the old processing matrix as multiplication partners. Moreover, the receiver apparatus 100 can be adapted for receiving multi-carrier signals and being operative for controlling a precoding operation in each of or a group of carriers in the multi-carrier signals.

In one embodiment the processing unit 120 is implemented as a multiplier and multiplies the old precoding matrix from the precoding matrix memory 124 with the update matrices from the codebook 122. Once a new precoding matrix is found, the processing unit can update the precoding matrix for the next update iteration.

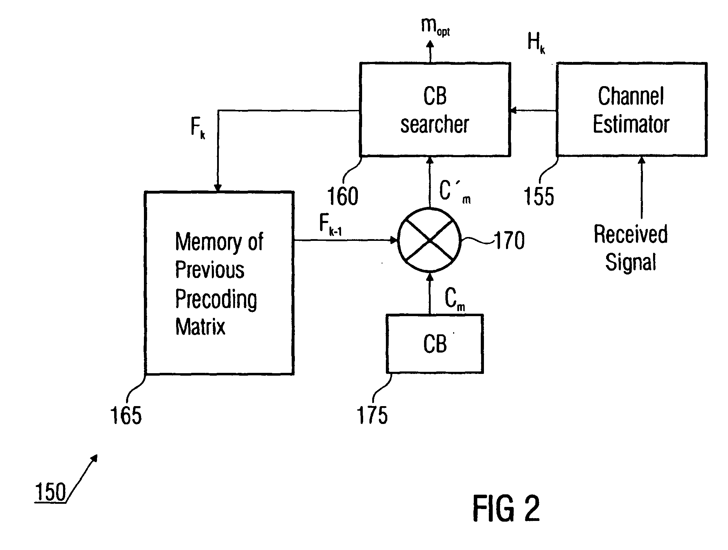

Fig. 2 shows another embodiment of a receiver apparatus 150. The receiver apparatus 150 comprises a channel estimator 155, which evaluates a channel estimate $\mathbf{H}_k$ from the received signal and provides the channel estimate $\mathbf{H}_k$ to a codebook searcher 160. The receiver further comprises a memory 165 for previous precoding matrices $\mathbf{F}_{k-1}$, which are multiplied by a multiplier 170 with update matrices $\mathbf{C}_m$ from a codebook 175, yielding a set of new precoding matrixes $\mathbf{C'}_m$, which is also provided to the codebook searcher 160. The updated precoding matrices are given by

$$\{\mathbf{C}'_1 \cdots \mathbf{C}'_l\} = \{\mathbf{C}_p \mathbf{F}_{k-1} \cdots \mathbf{C}_q \mathbf{F}_{k-1}\} \qquad , \qquad (12)$$

where the previous precoding matrix $F_{k-1}$ is multiplied on the right hand side in order to determine a set of possible new precoding matrices to be searched. In equation 12, one can also calculate a smaller number (than B) of updated precoding matrices. Generally l is an integer smaller than or equal to B, p is a lower multiplication index greater than or equal to one and q is a higher multiplication index

smaller than or equal to B. Thus, one can also calculate a subset of the indices from 1 to B e.g. 1,2,4,B. In this case p would be 1 and q would be B and there would only be two numbers in between, such as 2,4.

In yet another embodiment another matrix may be multiplied, i.e. $C'_k = C_k A_k F_{k-1}$, in order to carry out any other precoding or adaptation task. The codebook searcher 160 carries out a search throughout all updated precoding matrices $\mathbf{C'}_m$ in order to find an optimized precoding matrix $\mathbf{C'}_{m_{opt}}$, which for example in one embodiment maximizes the channel capacity for the given channel estimate $\mathbf{H}_k$, which can be denoted as

$$m_{opt} = \arg\max_m Capacity(\mathbf{H}, \sigma^2, \{\mathbf{C}'_m\}) \quad , \qquad (13)$$

wherein $\sigma^2$ denotes the noise variance or noise power. Note that in other embodiments the optimisation criterion may be different, for example maximizing a signal-to-noise-ratio or other metrics relating to a quality of a communication link. The codebook searcher 160 determines the optimum precoding matrix $\mathbf{C'}_{m_{opt}}$, which can then be provided to the memory 165 of previous precoding matrices as $\mathbf{F}_k$ for the next iteration of the precoding update. Furthermore, the codebook searcher 160 provides the index of the found optimized update matrix $\mathbf{C'}_{m_{opt}}$, i.e. $m_{opt}$ to the transmitter.

In another embodiment the codebook searcher 160 determines a maximum capacity on the basis of a minimum-mean-square-error-successive-interference-cancellation detection (MMSE-SIC = minimum-mean-square-error-successive-interference-cancellation). In another embodiment the processing unit 120 (Fig. 1) comprises a storage means for storing the codebook, according to the codebook 175.

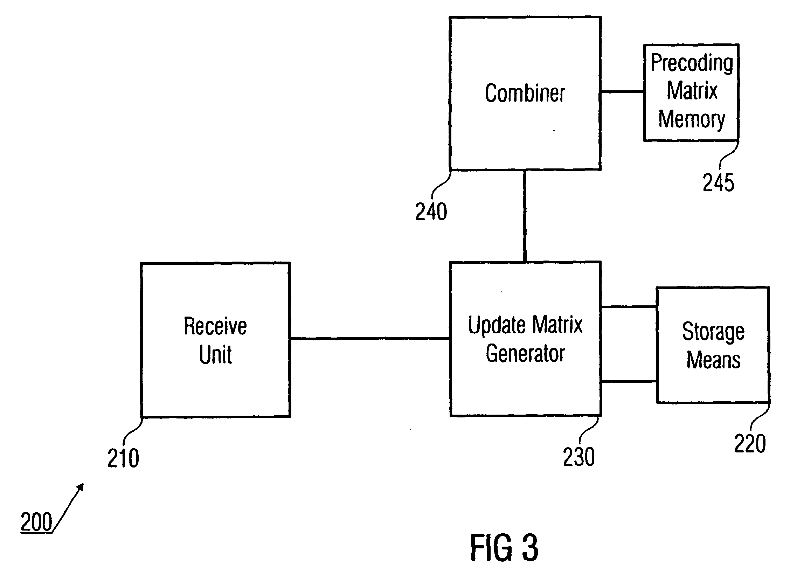

Fig. 3 shows an embodiment of a transmitter apparatus 200. The transmitter apparatus 200 comprises a receive unit 210, a storage means 220, an update matrix generator 230, a combiner 240, and a precoding matrix memory 245.

The transmitter apparatus 200 is adapted for transmitting a precoded signal, the signal being precoded using a an updated precoding matrix stored in the precoding matrix memory 245 within transmission scheme having a first number of transmit antennas and a second number of receive antennas, the first number being larger than one and the second number being larger or equal to one. The transmitter apparatus 200 comprises the receive unit 210 for receiving a received update index and the storage means 220 for storing a codebook having different update information items, each update information item having associated therewith an update index. The transmitter apparatus 200 further comprises the update matrix generator 230 for generating an update matrix having at least two rows and at least two columns using the received update index and the associated update information item from the codebook comprised within the storage means 220 and the combiner 240 for combining an earlier used precoding matrix 245 and the update matrix provided by the generator 230 to obtain the updated precoding matrix.

In one embodiment the receive unit 210 can be adapted for receiving a received update matrix index ($m_{opt}$) and the storage means 220 being adapted for storing a codebook having different update matrices ($\mathbf{C}_m$), each update matrix ($\mathbf{C}_m$) having associated therewith an update matrix index (m), an update matrix ($\mathbf{C}_m$) having at least two rows and at least two columns.

In another embodiment the combiner 240 is adapted for obtaining the updated precoding matrix ($\mathbf{F}_k$) by multiplication, the multiplication having the earlier used precoding matrix ($\mathbf{F}_{k-1}$) and the update matrix ($\mathbf{C}m_{opt}$) as multiplication partners and the earlier used precoding matrix ($\mathbf{F}_{k-1}$) being multiplied on the right hand side. The second number of receive antennas may be larger than one, and a precoding matrix ($F_{k-1}, F_k$) can be a square matrix.

Moreover, an update matrix ($\mathbf{C}_m$) may be square matrix. The transmitter apparatus 200 may be adapted for transmitting multi-carrier signals and being operative for controlling a precoding operation in each of or a group of carriers in the multi-carrier signals.

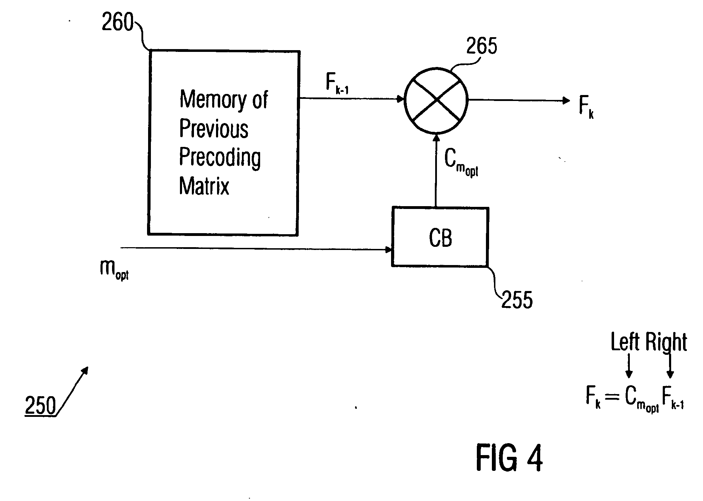

Fig. 4 shows another embodiment of a transmitter apparatus 250. The transmitter apparatus 250 comprises a codebook 255, which is provided with the optimum update matrix index $m_{opt}$, which is received from a receiver. With the received update matrix index, the codebook can provide the associated update matrix $\mathbf{C'}_{m_{opt}}$. The transmitter apparatus 250 further comprises a memory 260 for storing the previous precoding matrix $\mathbf{F}_{k-1}$. Furthermore, the receiver apparatus 250 comprises a multiplier 265, which multiplies the update matrix with the previous precoding matrix according to

$$\mathbf{F}_k = \mathbf{C}_{m_{opt}} \mathbf{F}_{k-1} \; . \qquad (14)$$

The multiplier 260 can then provide the updated precoding matrix $\mathbf{F}_k$. According to the embodiment shown in Fig. 4, the combiner 240 can be implemented as a multiplier 265. In another embodiment, the transmitter apparatus 200 respectively 250 comprises a precoder for applying the precoding matrix $\mathbf{F}_k$ to a transmit signal.

Furthermore the precoding matrix $\mathbf{F}_k$ can be initialized in another embodiment, initialization may help to reduce a tracking error in some situations. The initialization can be done on a periodical basis or it can be triggered by a control signal or feedback from a receiver. The initialization matrix can be one element of the codebook and in an embodiment it can be composed of unit vectors as taken from an identity matrix, e.g. for $N_t$=4 transmit antennas and $N_s$=2 data streams

$$\begin{bmatrix} 1 & 0 & 0 & 0 \\ 0 & 1 & 0 & 0 \\ 0 & 0 & 1 & 0 \\ 0 & 0 & 0 & 1 \end{bmatrix} \quad \Rightarrow \quad \mathbf{F}_0 = \begin{bmatrix} 1 & 0 \\ 0 & 1 \\ 0 & 0 \\ 0 & 0 \end{bmatrix} \quad . \qquad (15)$$

Note an essential difference to the conventional scheme is that the precoding matrix is updated by multiplying the previous precoding matrix to $\mathbf{C'}_{m_{opt}}$ from the right hand side. This eliminates the need for a column adder for a matrix size adjustment and the need for a singular value decomposition. Furthermore, the use of a matrix codebook instead of a vector codebook as in a conventional scheme eliminates the need for a matrix constructor, and in addition reduces the required feedback information. Therefore, embodiments provide the advantage that they reduce the hardware and software complexity in a transmitter and in a receiver. Furthermore, the required feedback information is less than in the conventional scheme, therefore requiring less feedback bits , data rate, and transmission resources in the feedback channel.

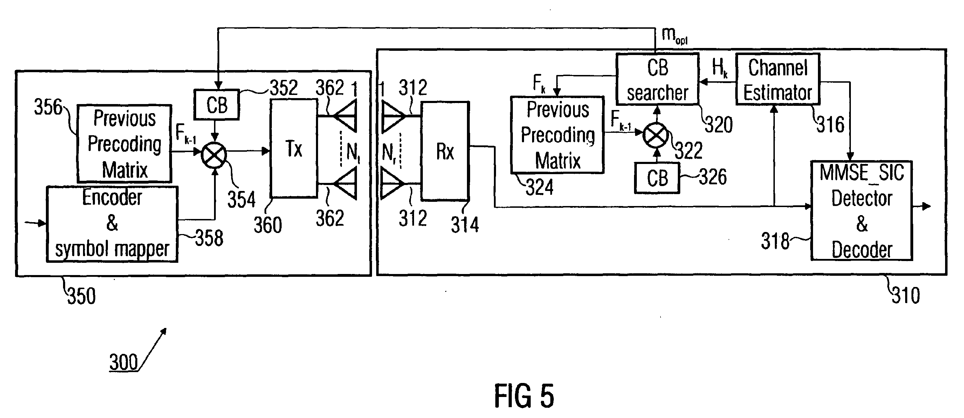

Fig. 5 shows a MIMO transmission system 300, comprising an embodiment of a receiver apparatus 310. The receiver apparatus 310 comprises a number $N_r$ of receive antennas 312 being coupled to a receive unit 314. The receive unit 314 provides a received signal to a channel estimator 316 and to an MMSE-SIC detector and decoder 318. The channel estimator 316 then provides a channel estimate to the MMSE-SIC detector and decoder 318 and to a codebook searcher 320, which is coupled to a multiplier 322 from which it is provided with the result of the multiplication of a previous precoding matrix $\mathbf{F}_{k-1}$ stored in a storage means 324 and update matrices from a codebook 326, similar to what was described above. Once having found the optimum update matrix, the codebook searcher 320 provides the optimum update matrix index $m_{opt}$ to a transmitter apparatus 350. The MIMO scheme is preferably such the first and the second numbers are such that a precoding matrix $\mathbf{F}_k$, or $\mathbf{F}_{k-1}$ has more rows than columns. However, the number of receiving antennas can also be one.

The transmitter apparatus 350 comprises a codebook 352, which receives the optimum update matrix index $m_{opt}$ from the receiver apparatus 310. The codebook 352 can then provide the optimum update matrix to a multiplier 354. The multiplier 354 further receives the previous precoding matrix $\mathbf{F}_{k-1}$ from a previous precoding matrix storage 356. An encoder and symbol mapper 358 provides a transmit signal to the multiplier 354, which multiplies the transmit signal with the updated precoding matrix and provides the result to a transmit unit 360. The transmit unit 360 utilizes a number $N_r$ of transmit antennas 362 to transmit the signal through the radio channel to the receiver apparatus 310.

In the embodiment shown in Fig. 5, the codebook searcher 320 can evaluate the optimum update matrix, e.g. by optimizing a link or system capacity, which can be calculated assuming MMSE-SIC detection, and therefore in one embodiment the codebook searcher 320 and the MMSE-SIC detector and decoder 318 can partially share circuits, which leads to a further reduction of the hardware and software complexity. Furthermore, in another embodiment, each of the codebook matrices is a unitary matrix, which will be further detailed below. In embodiments of codebook based precoding systems, the transmitter and the receiver should share the same codebook. The codebook can be generated offline and stored in a storage medium or memory in a transmitter as well as in a receiver. Generally, the generation of a codebook relates to the system performance, therefore is the generation of a codebook critical. According to the embodiments described above, each element of the considered codebooks $\mathbf{C}_k$ is an $N_t$ x $N_t$ matrix. Additionally, as described above, a tracking precoding scheme is assumed, so the codebook should be generated to have tracking capability.

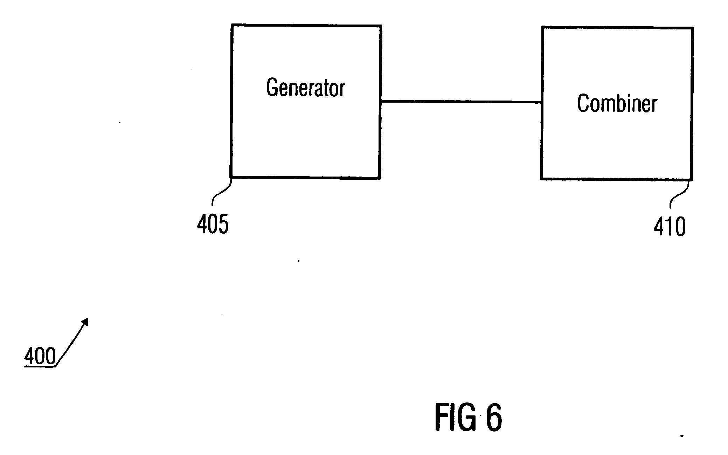

Fig. 6 shows an embodiment of a codebook generator apparatus 400, which comprises a generator 405 and a combiner 410. The embodiment of the codebook generator apparatus 400 is adapted for generating a codebook comprising one or more update matrices to be used in a precoding scheme with a transmission scheme having a first number of transmit antennas and a second number of receive antennas, the first number being larger than one and the second number being larger or equal to one, calculating each update matrix, comprising a generator (405) for generating a first matrix and for generating a second matrix being correlated with the first matrix by a correlation degree and comprising a combiner (410) for combining the first matrix and the second matrix to obtain one update matrix.

The codebook generator apparatus 400 can generate a codebook having at least two update matrices to be used in a precoding operation, each update matrix being associated with an update matrix index the update matrices being calculated by generating a first matrix and by generating a second matrix being correlated with the first matrix by a correlation degree and by combining the first matrix and the second matrix to obtain one update matrix, where for calculating different update matrices, a different correlation degree or a different first matrix and the same correlation degree is used.

In one embodiment the generator 405 is adapted for generating matrices with column vectors having a magnitude between 0.5 and 1.5 and with angles between any two column vectors being between 45° and 145°. In another embodiment the generator 405 is adapted for generating unitary matrices, matrices which have orthogonal columns, or matrices which are close to orthogonal, which can for example be based on random or pseudo-random matrices. In another embodiment each of the update matrices has an associated unique update matrix index. In yet another embodiment the combined update matrix has elements on its diagonal, whose magnitudes are at least twice as high as a magnitude of any off-diagonal element. The correlation degree between the first and the second matrix can for example be realized by a generator having a coherence time, i.e. the correlation degree corresponding to a time shift between two generated matrices. The correlation degree can further be associated with the fading property of a radio channel. In an embodiment of a larger codebook matrices with a number of different correlation degrees are considered for generating the update matrices. For example the first and second matrices can be generated using a Jakes model.

In another embodiment of codebook generator apparatus 400, the generator 405 can be adapted for generating the first and second matrices by generating random matrices to which a singular value decomposition is applied or any matrix triangularization method, in order to obtain unitary matrices. The unitary matrices may then be multiplied to each other in order to create an update matrix also being unitary, which has tracking capability. In yet another embodiment the codebook as described above may be stored on a storage medium. When using matrix codebooks, it is preferable that each element matrix of the codebook is a unitary matrix, which has orthogonal columns leading to a better performance and lower complexity.

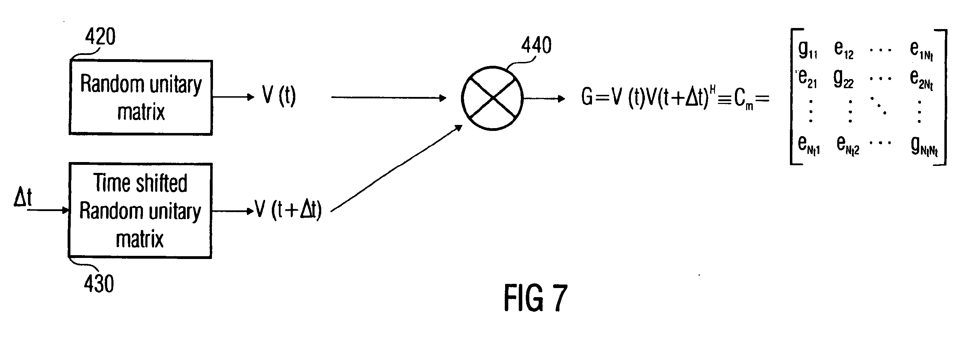

Fig. 7 shows an embodiment of a codebook generation method. A first unitary matrix V(t) is generated by a random unitary matrix generator based on a given time shift $\Delta t$. The two matrices are then multiplied in a step 440 of which the outcome is a matrix G, according to

$$\mathbf{G} = \mathbf{V}(t)\mathbf{V}(t+\Delta t)^{H} \equiv \mathbf{C}_{m} = \begin{bmatrix} g_{11} & \varepsilon_{12} & \cdots & \varepsilon_{1N_{t}} \\ \varepsilon_{21} & g_{22} & \cdots & \varepsilon_{2N_{t}} \\ \vdots & \vdots & \ddots & \vdots \\ \varepsilon_{N_{t}1} & \varepsilon_{N_{t}2} & \cdots & g_{N_{t}N_{t}} \end{bmatrix} , \qquad (16)$$

yielding one update matrix $\mathbf{C}_m$ as given in equation 16. According to the embodiment in Fig. 7, each element of the codebook is generated by multiplying two random unitary matrices. Therefore, the resulting matrix is also unitary. Additionally, the two unitary matrices are time shifted versions from each other, i.e. for as long as the generator has a coherence time, they are correlated accordingly, so the resulting codebook element has a tracking capability. More specifically, also referring to equation 16, when a channel variation between two sample periods, i.e. between two feedback periods, is small, the off-diagonal elements $\varepsilon_{ij}$ of $\mathbf{C}_m$ are small compared to the diagonal elements $g_{ii}$. Such a matrix is for finer precoding matrix adjustment. If the channel variation between two sampled periods is large, for example due to fast fading in the radio channel, the off-diagonal elements $\varepsilon_{ij}$ should be as large as the diagonal elements $g_{ii}$ to enable a more dynamic precoding matrix adjustment. Therefore, when the codebook is designed in such a way that each element matrix is generated from various $\Delta t$, update matrices can be generated for various channel environments. Therefore, embodiments provide the advantage that the codebook can be adapted to various environments based on the time shift $\Delta t$, respectively based on the correlation degree.

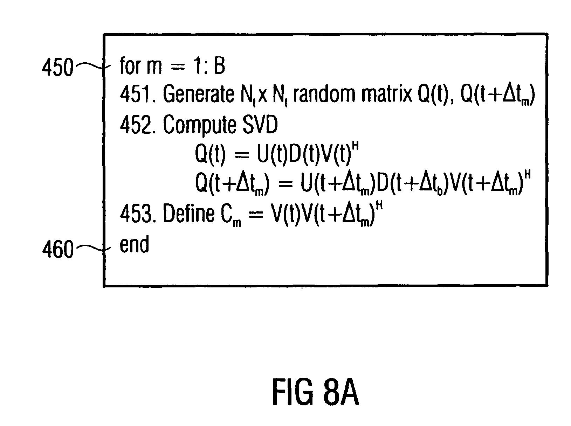

Fig. 8a shows a pseudo code of an embodiment of a method for generating an according codebook. In the pseudo code, depicted in Fig. 8a B is the codebook size and accordingly a loop runs over B iterations indicated by the "for"-loop in steps 450 and 460. In a step 451 two matrices of size Nt x $N_t$ are generated, which are time shifted by $\Delta t$. In a step 452 singular value decompositions of both matrices are calculated, and in a step 453 two obtained unitary matrices from step 452 are multiplied in order to obtain one update matrix $C_m$. The loop then runs over B iterations. The random matrices generated in step 451 may be generated based on a Jakes model, which is also widely used to generate fading coefficients. The singular value decomposition is used to obtain unitary matrices. In step 453, each element of the codebook is computed. Furthermore, the process of Fig. 8a can be repeated for a sufficient number of times in order to obtain an optimum set of codebooks or update matrices in terms of achievable channel capacities depending on the environment.

In another embodiment a subset of the matrix G could be defined as

$$
\mathbf{G} = \mathbf{V}(t)\mathbf{V}(t+\Delta t)^{H} \equiv
\begin{bmatrix}
g_{11} & \varepsilon_{12} & \cdots & \varepsilon_{1N_t} \\
\varepsilon_{21} & g_{22} & \cdots & \varepsilon_{2N_t} \\
\vdots & \vdots & \ddots & \vdots \\
\varepsilon_{N_t 1} & \varepsilon_{N_t 2} & \cdots & g_{N_t N_t}
\end{bmatrix}
\Rightarrow \underline{C}_m =
\begin{bmatrix} & \\ & \\ & \end{bmatrix}
\quad , \quad (17)
$$

i. e. a subset e. g. a row or column vector of $\mathbf{V}(t)\mathbf{V}(t+\Delta t)^{H}$ is used to generate an update matrix for the codebook. In one embodiment the combiner (410) is adapted for using only a subset of a combination of the first and the second matrices for generating an update matrix and in yet another embodiment the subset corresponds to a row or column vector.

The codebook generator apparatus (400) may have the generator being adapted for generating the first and second matrices in order to optimize a channel capacity by several trials. The codebook generator apparatus (400) can be further comprising a means for quantizing the update matrices. The update matrices may be square matrices in another embodiment.

The matrices , which are generated as part of the pseudocode in Fig. 8a can have propagation channel properties. In one embodiment they may be generated as mutually random independent identically distributed variables, i.e. the correlation degree can also be zero. In another embodiment they can be generated as mutually correlated random variables, where the correlation value or degree can be adjusted. In yet another embodiment a range of different correlation values is covered. There may also exist an imbalance among the average power of each of the components, i.e. $\|q_{11}\|^2 \neq \|q_{22}\|^2$. If the codebook gets generated considering the characteristics of the actual propagation channel, such as correlation between antennas and average power imbalance among antennas or propagation paths, the link or system capacity can even further be increased. Furthermore the codebook may include update matrices, which are close or even identical to an identity matrix, which provides the option of not updating a precoding matrix in some situations, in which it might be more beneficial to not update the precoding matrix.

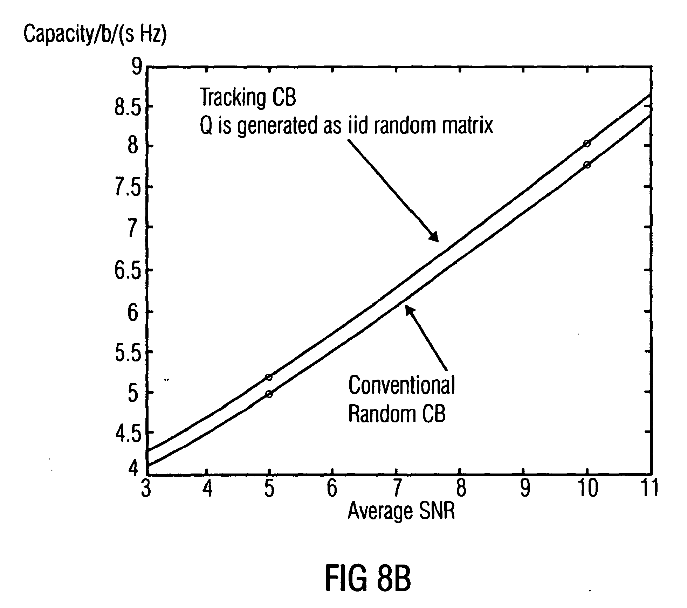

Fig. 8b shows a viewgraph of achievable capacity improvements with an embodiment. Fig. 8b shows two link capacity graphs versus an average signal-to-noise-ratio (SNR). The figure at the top is achieved with the embodiment, the figure at the bottom with the conventional scheme. An exemplified scenario with a number $N_t$=4 of transmit antennas, a number $N_r$=2 receive antennas, and a number $N_s$=2 of data streams is considered. The embodiment provides a capacity improvement of about 0.3b/(s Hz).

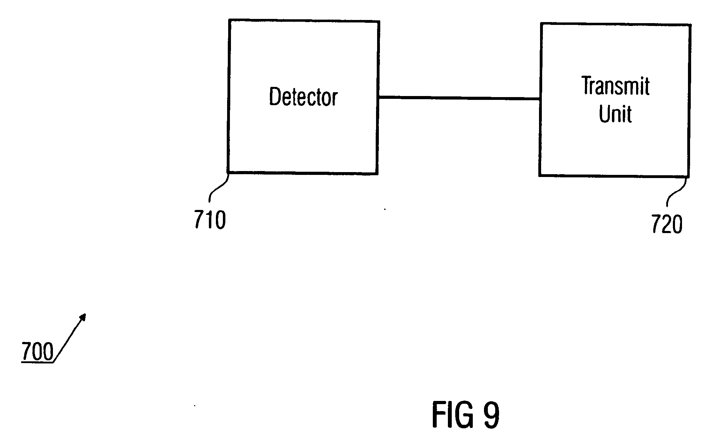

Codebook based precoding with tracking capability exploits the channel coherence between two sample points, i.e. the coherence of one feedback period, and thus offers higher capacity then one-shot codebook based precoding. However, if feedback errors occur or sudden changes in the propagation channel occurs, tracking of a reliable precoding matrix can sometimes be difficult. Therefore, instead of providing differential update information, as in the case of codebook based precoding with tracking capability, it can in some situations be beneficial to provide absolute precoding information, as in the case of one-shot codebook based precoding. Fig. 9 shows a receiver apparatus 700 comprising a detector 710 and a transmit unit 720. The receiver apparatus 700 is adapted for providing precoding information, comprising a detector 710 for detecting an event and a transmit unit 720 for transmitting absolute precoding information at a first time instant in response to a detected occurrence of the event and for transmitting differential precoding information at a second time instant different from the first time instant.

In an embodiment, the detector 710 is adapted for detecting as the event, a lapse of a predefined period since an earlier time instant, at which the absolute precoding information was sent or, as the event, a situation in which the absolute precoding information is more advantageous for a communication link than the differential precoding information.

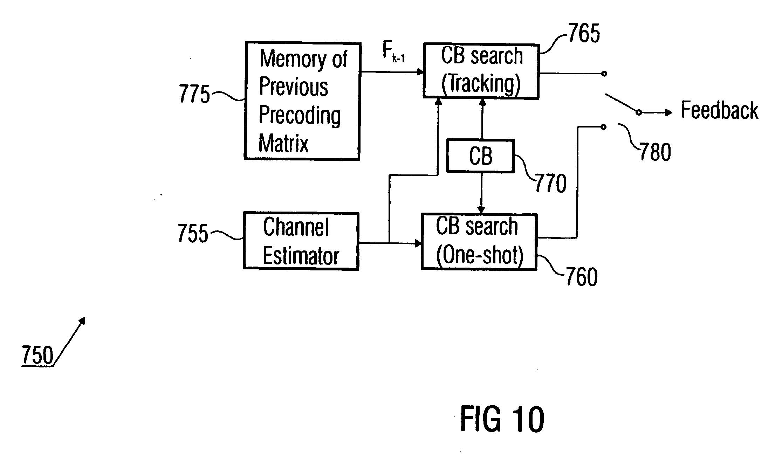

Fig. 10 shows another embodiment of a receiver apparatus 750. The receiver apparatus 750 comprises a channel estimator 755 for providing a channel estimate to a codebook searcher 760, which is adapted for searching a one-shot codebook, the channel estimator 755 further providing the channel estimate to another codebook searcher 765, which is adapted for searching in a tracking capable codebook. In the embodiment of the receiver apparatus 750 depicted in Fig. 10 the codebook searcher 765 and the codebook searcher 760 access the same codebook 770. In another embodiment they may have separated codebooks. The receiver apparatus 750 further comprises a memory unit 775, which provides the codebook searcher 765 with tracking capability with the previous precoding matrix in order to enable a codebook search as described above. Furthermore, the embodiment depicted in Fig. 10 comprises a switch 780, which indicates that the embodiment can either transmit precoding information based on a one-shot codebook, i.e. absolute precoding information, respectively can transmit tracking capable update information being based on a codebook with tracking capability, i.e. differential precoding information.

In another embodiment the receiver apparatus 700 respectively the detector 710 is adapted for detecting the situation in which the absolute precoding information is more advantageous based on a range of the absolute precoding information and the range of the differential precoding information. In this embodiment differential precoding information is provided for tracking small changes in the radio channel. However, the codebook is not able to track faster changes in the radio channel as for example evoked by excessive fast fading, high mobility or Doppler-scenarios. Whenever the change in the channel is too large, the detector 710 may decide on transmitting absolute precoding information. In another embodiment the transmit unit 720 is adapted for transmitting an indicator indicating whether currently transmitted precoding information is absolute or differential. This indicator can be implemented by a single bit to be transmitted within a feedback or control channel, indicating how the contained control information shall be interpreted.

In another embodiment the receiver apparatus may be adapted for receiving multi-carrier signals and be operative for providing precoding information operation of each of or a group of carriers in the multi-carrier signals. The receiver apparatus (700) can e.g. provide precoding information in terms of a matrix codebook index. In another embodiment the receiver apparatus (700) may provide differential precoding information on the basis of a matrix codebook, the matrix codebook having a special codebook index for absolute precoding information, the absolute precoding information being provided on the basis of a column vector of an absolute precoding matrix.

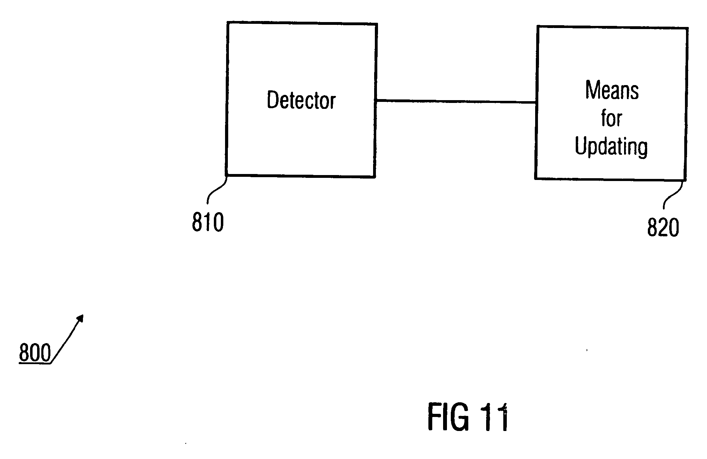

Fig. 11 shows an embodiment of a transmitter apparatus 800. The transmitter apparatus 800 is adapted for transmitting a signal using precoding, the precoding being updated on a precoding information, comprising a detector 810 for detecting an event and a means for updating 820 with absolute precoding information at a first time instant in response to a detected occurrence of the event and for updating with differential precoding information at a second time instant different from the first time instant. In one embodiment the detector 810 is adapted for detecting as the event, a lapse of a defined period since an earlier time instant at which the absolute precoding information was received or, as the event, a situation in which the absolute precoding information is more advantageous for a communication link than the differential precoding information. In another embodiment the transmitter apparatus 800 further comprises a receiver for receiving the absolute precoding information or the differential precoding information. In another embodiment the receiver is adapted for providing an indicator whether the situation in which the absolute precoding information is more advantageous than the differential precoding information has occurred. In one embodiment, the transmitter apparatus may be able to judge the situation by estimating a radio channel itself.

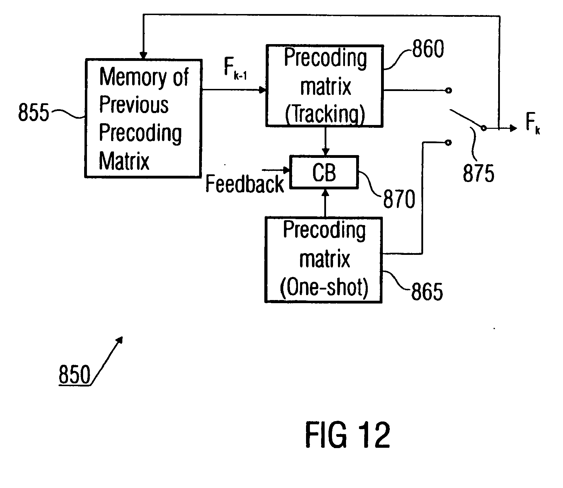

Fig. 12 shows another embodiment of a transmitter apparatus 850. The transmitter apparatus 850 comprises a memory 855 for storing a previous precoding matrix $\mathbf{F}_{k-1}$, which is provided to a precoding matrix codebook searcher with tracking capability 860. The transmitter apparatus 850 further comprises a precoding matrix searcher 865 for one-shot-mode 865, which has a common codebook 870 with the precoding matrix codebook searcher 860 for tracking mode. The transmitter apparatus 850 further comprises a switch 875, which can switch between precoding based on tracking, i.e. based on differential precoding information or precoding based on one-shot updates, i.e. precoding based on absolute precoding information. In another embodiment of the transmitter apparatus 800 separate codebooks are available for absolute and differential precoding information.

The transmitter apparatus (800) may in one embodiment be adapted for transmitting multi-carrier signals and being operative for precoding each of or a group of carriers in the multi-carrier signals with differential or absolute precoding information. The transmitter apparatus (800) can precode on a basis of a matrix codebook index and the matrix codebook may have a special codebook index for absolute precoding information, the absolute precoding information being provided on the basis of a column vector of an absolute precoding matrix.

The embodiments described above provide a mechanism to switch between tracking and one-shot codebook mode to combat the situation where sudden channel changes or feedback errors occur. According to an embodiment, the precoding matrix generation at the transmitter apparatus and the codebook search are performed either in tracking or in one-shot codebook mode. In one embodiment, one codebook is shared between the two modes, and in yet another separate codebooks are used. The switching between the two modes can for example in one embodiment be done in a periodical manner according to a predetermined period known to the transmitter and the receiver. In another embodiment switching can be done based on the feedback from the receiver, e.g. by an indicator used within the feedback.

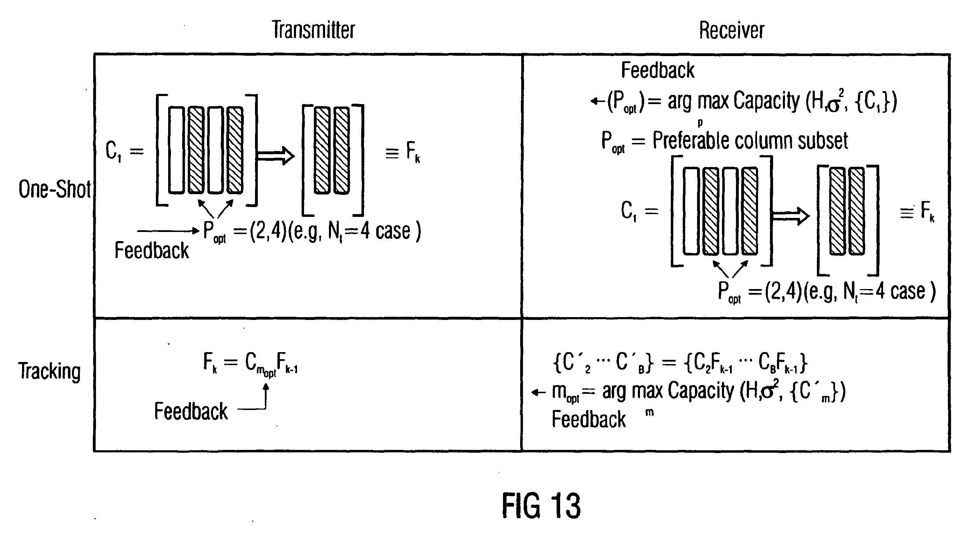

Fig. 13 shows a table with 4 cells, where the cells on the left hand side refer to the transmitter, the cells on the right hand side refer to the receiver, the cells at the top refer to one-shot mode, and the cells at the bottom refer to tracking mode. In one-shot mode, it is preferable to use a column vector index as a precoding vector, as is described in detail in R1-050903, Qualcomm, Europe, "Description and link simulations of MIMO schemes for OFDMA based E-UTRA downlink evaluation".

As can be seen from Fig. 13 on the transmitter side in one-shot mode, column vectors are chosen from a codebook and used as precoding matrix. The example considered in Fig. 13 utilizes four transmit antennas, i.e. $N_t=4$. On the receiver side in one-shot mode from the same codebook, i.e. from the same matrix, column vectors are chosen accordingly, for example for maximizing a channel capacity as indicated in Fig. 13. The preferable column subset is then signaled to the transmitter. In tracking mode, the transmitter applies a signaled update matrix to the previous precoding matrix according to the description above. The receiver evaluates an optimized update matrix index according to what was described above and feedbacks it to the transmitter. In tracking mode, the initial precoding matrix, which is

EP 1 919 097 B1

determined in one-shot mode, can be set using one-shot mode. From there it can be updated using tracking mode.

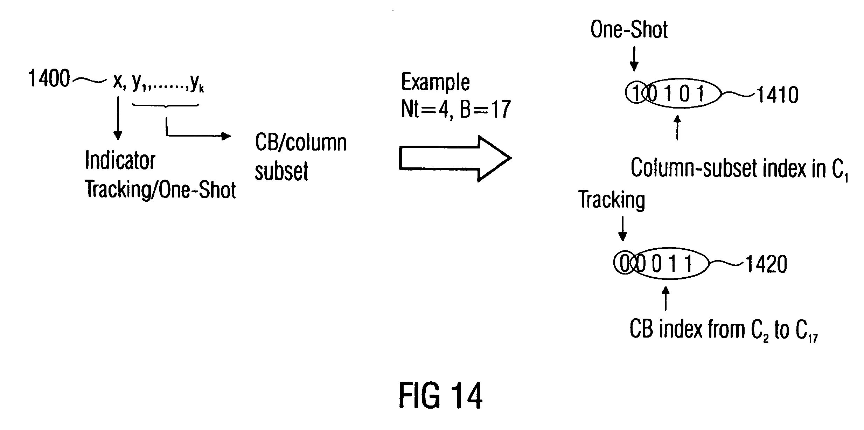

Fig. 14 shows an embodiment of a signaling scheme. It is supposed that a signaling word comprises a number of digits according to the signaling word 1400. In the embodiment depicted in Fig. 14, the signaling word 1400 comprises an indicator at its first digit, indicating whether tracking or one-shot mode is used. The other digits refer to a codebook index in case of tracking mode, respectively, to a column subset of a matrix in one-shot mode. Again considering the example of four transmit antennas, i.e. $N_t$=4, the two sample code words 1410 and 1420 may result. The sample signaling word 1410 has a one in its first digit, indicating one-shot note. Therefore, the potential transmitter would know that the last digits refer to a column subset index $C_1$. If the signaling word 1420 is received, the transmitter would know by the first digit being equal to zero that tracking mode is used. The last 4 digits of the signaling word then refer to a codebook index for example for the codebook $C_2$ to $C_{17}$. The codebook considered in Fig. 17 for tracking mode and one-shot mode comprises B=17 matrices of which the first $C_1$ is dedicated to one-shot mode and $C_2$ to $C_{17}$ are dedicated to tracking mode.

The first bit of the 5-bit index is the indicating bit if tracking or one-shot mode is used. The other bits respectively, are column subscript indices in the one-shot case, and codebook indices in the tracking case. In this way, the same feedback bits can be used for both modes.

Obviously, if the switching between the two modes is performed on a periodical basis according to a predetermined time scheme, the first bit x in Fig. 14 is not necessary and can be omitted. The described embodiments can be straight forwardly combined with for example OFDM (OFDM = orthogonal frequency division multiplexing) - Systems, in which precoding should be conducted for subcarriers or chunks of subcarriers. In general, the embodiments can be used with any multiple access system.

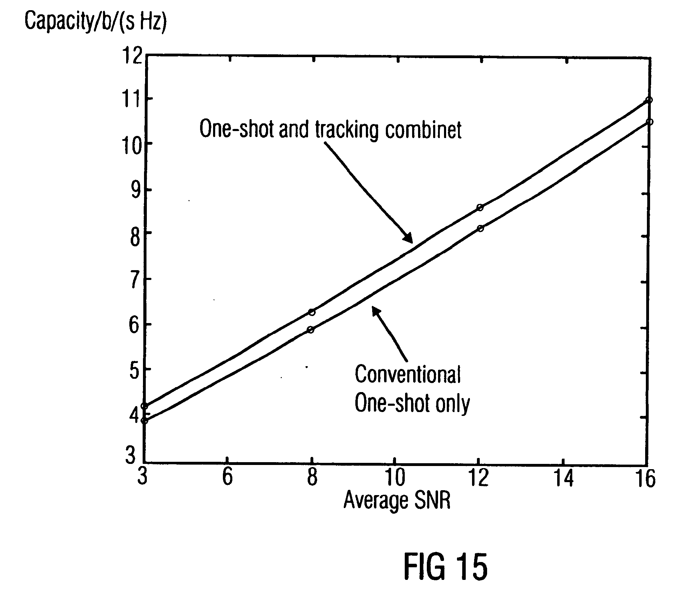

Fig. 15 shows a viewgraph illustrating the achievable capacity improvements with an embodiment. Fig. 15 shows two capacity figures in b/ (s Hz) versus an average SNR of the embodiment and the conventional scheme in one-shot mode only. The example scenario utilizes $N_t$=4 transmit antennas, $N_r$=2 receive antennas, and $N_s$=2 data streams. When severe radio channel changes are to be expected in a certain environment the conventional scheme only uses one-shot mode, contrary hereto the embodiment can utilize the above- mentioned switching mechanism. The capacity achieved with the embodiment is shown at the top, the capacity achieved with the conventional concept is shown at the bottom of Fig. 15. It can be seen that the embodiment achieves about 0.5 b/(s Hz) capacity gain, using one extra bit as mode indicator.

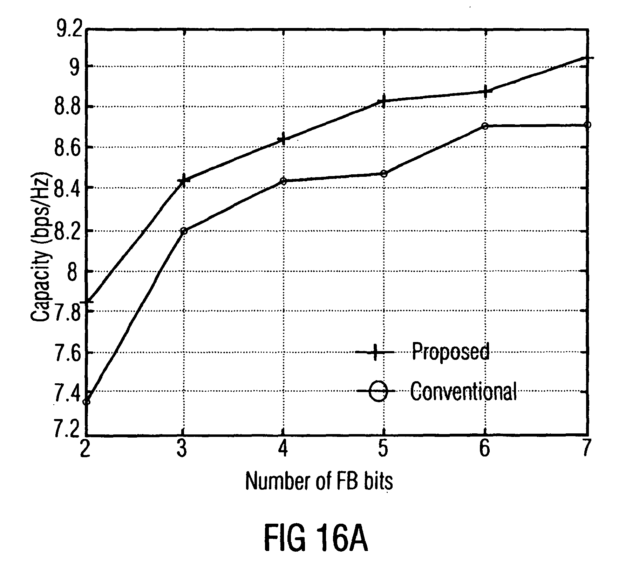

Fig. 16a shows a viewgraph of an evaluated link capacity in b/(s Hz) versus a number of feedback bits. For the simulation of the capacity figures depicted in Fig. 15 a number of $N_t$=4 transmit antennas, a number of $N_r$=2 receive antennas, and a number of $N_s$=2 data streams were assumed. The viewgraph shows the conventional scheme indicated by circles and the embodiment using crosses. It can be seen that the embodiments achieve a higher capacity independent of the number of feedback bits used. It is therefore an advantage of the embodiments that they provide a higher link and system capacity.

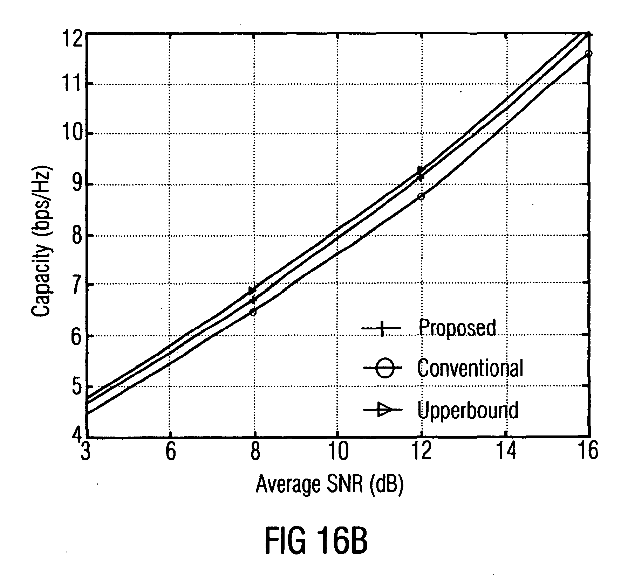

Fig. 16b shows another viewgraph, showing a link capacity in b/(s Hz) versus an average SNR. For the simulations, of which the results are depicted in Fig. 16b, a number of $N_t$=4 transmit antennas, a number of $N_r$=2 receive antennas, and a number of $N_s$=2 data streams were assumed. The viewgraph shows three capacity diagrams one of the proposed approach indicated by crosses, one of the conventional approach indicated by circles, and one of the theoretical upper bound (Shannon bound). The viewgraph shows that the capacity of the proposed approach is closer to the upper bound than the conventional approach. Embodiments therefore provide the advantage that the capacity of a link or system is higher than for the conventional approach.

In summary embodiments provide the advantage that a higher capacity can be achieved in MIMO transmission systems using precoding. Furthermore, less feedback is required for embodiments than for conventional approaches. Therewith, the spectral efficiency of MIMO-systems can be improved, extra capacity due to the reduced feedback can be utilized.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is therefore a machine readable carrier, the program code being operative for performing the inventive methods when the computer program products runs on a computer. In other words, the inventive methods are, therefore, a computer program having a program code adapted to perform at least one of the inventive methods when the computer program runs on a computer.

**Claims**

**1.** Codebook generator apparatus (400) for generating a codebook comprising one or more update matrices for updating precoding matrices at a transmitter to be used in a precoding scheme with a transmission scheme having a first number of transmit antennas and a second number of receive antennas, the first number being larger than one and the second number being larger or equal to one, calculating each update matrix, comprising

a generator (405) for generating a first matrix and for generating with a time shift a second matrix being correlated with the first matrix by a correlation degree;

a combiner (410) for combining the first matrix and the second matrix to obtain one update matrix for updating precoding matrices at a transmitter.

2. Codebook generator apparatus (400) of claim 1, wherein a plurality of update matrices is generated and wherein for calculating different update matrices a different correlation degree or a different first matrix and the same correlation degree is used.

3. Codebook generator apparatus (400) of claim 1 or 2, wherein the combiner (410) is adapted for using only a subset of a combination of the first and the second matrices for generating an update matrix.

4. Codebook generator apparatus (400) of claim 3, wherein the subset corresponds to a row or column vector.

5. Codebook generator apparatus (400) of one of the claims 1 to 4, wherein the generator (405) is adapted for generating matrices with column vectors having a normalized magnitude between 0.5 and 1.5, or wherein the angle between any two column vectors is between 45˚ and 135˚.

6. Codebook generator apparatus (400) of one of the claims 1 to 4, in which the update matrices are symmetric or conjugate symmetric matrices.

7. Codebook generator apparatus (400) of one of the claims 1 to 6, wherein the generator (405) is adapted for generating matrices having orthogonal or almost orthogonal columns.

8. Codebook generator apparatus (400) of one of the claims 1 to 7, wherein the generator (405) is adapted for generating unitary matrices or almost unitary matrices, the unitary or almost unitary matrices having orthogonal or almost orthogonal columns or having the norm of a column vector being one or almost one.

9. Codebook generator apparatus (400) of one of the preceding claims, wherein the generator (405) is adapted for generating random or pseudo-random matrices.

10. Codebook generator apparatus (400) of one of the preceding claims, wherein each of the update matrices is associated with a unique update matrix index.

11. Codebook generator apparatus (400) of one of the preceding claims, wherein the generator (405) is adapted for generating the first and the second matrices such that the obtained update matrix has elements on its diagonal, whose average magnitudes are at least twice the average magnitude of any off-diagonal element.

12. Codebook generator apparatus (400) of one of the preceding claims, wherein an update matrix is a square matrix.

13. Codebook generator apparatus (400) of one of the preceding claims, wherein the correlation degree is associated with a fading property of a radio channel.

14. Codebook generator apparatus (400) of one of the preceding claims, wherein the generator (405) is adapted for generating matrices with a number of different correlation degrees.

15. Codebook generator apparatus (400) of one of the claims 1 to 14, wherein the generator (405) is adapted for generating the first and second matrices based on a Jakes model.

16. Codebook generator apparatus (400) of one of the claims 1 to 15, wherein the generator (405) is adapted for generating the first and second matrices by generating random matrices to which a matrix triangularization technique is applied.

17. Codebook generator apparatus (400) of one of the claims 1 to 16, wherein the generator (405) is adapted for generating the first and second matrices in order to optimize a channel capacity by several trials.

18. Codebook generator apparatus (400) of one of the claims 1 to 17, further comprising a means for quantizing the update matrices or the generator (405) being adapted for generating quantized matrices.

19. Codebook generator apparatus (400) of one of the claims 1 to 18, wherein the combiner (410) is adapted for combining the first matrix and the second matrix by multiplying.

20. Method for generating one or more update matrices for updating precoding matrices at a transmitter to be used in a precoding scheme with a transmission scheme having a first number of transmit antennas and a second number of receive antennas, the first number being larger than one and the second number being larger or equal to one, comprising

   calculating each update matrix by

      generating a first matrix;
      generating with a time shift a second matrix being correlated with the first matrix by a correlation degree;

   combining the first matrix and the second matrix to obtain one update matrix for updating precoding matrices at a transmitter.

21. Computer program having a program code adapted to perform the method of claim 20 when the program runs on a computer.

22. Codebook having at least two update matrices for updating precoding matrices at a transmitter to be used in a precoding operation each update matrix being associated with an update matrix index, the update matrices being calculated by generating a first matrix, generating with a time shift a second matrix being correlated with the first matrix by a correlation degree and combining the first matrix and the second matrix to obtain one update matrix, where for calculating different update matrices a different correlation degree or a different first matrix and the same correlation degree is used.

23. Storage medium having the codebook of claim 22 stored thereon.

24. Storage medium of claim 23 having the codebook stored in a quantized manner.

25. Storage medium of one of the claims 23 or 24, being implemented in a receiver apparatus for controlling a precoding operation in a transmitter within a transmission scheme having a first number of transmit antennas and a second number of receive antennas, the first number being larger than one and the second number being larger or equal to one, comprising a channel estimator for estimating a radio channel between the transmitter and the receiver apparatus based on a received signal to determine a radio channel estimate, and a processing unit for providing possible new precoding matrices based on the update matrices stored in the update matrices codebook and an old precoding matrix, the update matrix having at least two rows and at least two columns, and a searcher for searching a new precoding matrix for fulfilling an optimization criterion based on a radio channel estimate among the possible new precoding matrices, and a transmit unit for transmitting the update matrix index, which is associated with the new precoding matrix.

26. Storage medium of one of the claims 23 or 24, being implemented in a transmitter apparatus for transmitting a precoded signal, the signal being precoded using an updated precoding matrix within a transmission scheme having a first number of transmit antennas and a second number of receive antennas, the first number being larger than one and the second number being larger or equal to one, comprising a receive unit for receiving a received update index, a storage means for storing a codebook having different update information items, each update information item having associated therewith an update index, an update matrix generator for generating an update matrix having at least two rows and at least two columns, using the received update index and the associated update information item from the codebook having the different update information items, and a combiner for combining an earlier used precoding matrix and the update matrix to obtain the updated precoding matrix.

27. Storage medium of one of the claims 23 to 25, being implemented in a receiver apparatus for providing precoding information, comprising a detector for detecting an event, a transmit unit for transmitting absolute precoding information on a first time instant in response to a detected occurrence of the event and for transmitting differential precoding information at a second time instant different from the first time instant.

28. Storage medium of claim 27, wherein the detector is adapted for detecting as the event, a lapse of a predefined period since an earlier time instant at which the absolute precoding information was sent or, as the event, a situation in which the absolute precoding information is more advantageous for a communication link than a differential precoding information.

29. Storage medium of claim 26 being implemented in a transmitter apparatus being adapted for transmitting a signal using precoding, the precoding being updated on a precoding information, comprising a detector for detecting an occurrence for an event, and a means for updating with absolute precoding information at a first time instant in response to a detected occurrence of the event and for updating the differential precoding information at a second time instant different from the first time instant.

30. Storage medium of claim 29, wherein the detector is adapted for detecting as the event, a lapse of a predefined period since an earlier time instant at which the absolute precoding information was received or as the event, a situation in which the absolute precoding information is more advantageous for a communication link than the differential precoding information.


**Patentansprüche**

1. Codebucherzeugervorrichtung (400) zum Erzeugen eines Codebuchs mit einer oder mehreren Aktualisierungsmatrizen zum Aktualisieren von Vorcodierungsmatrizen an einem Sender, der in einem Vorcodierungsschema verwendet werden soll, mit einem Sendeschema mit einer ersten Anzahl von Sendeantennen und einer zweiten Anzahl von Empfangsantennen, wobei die erste Anzahl größer als eins ist und die zweite Anzahl größer oder gleich eins ist, die jede Aktualisierungsmatrix berechnet, die folgende Merkmale aufweist:

   einen Erzeuger (405) zum Erzeugen einer ersten Matrix und zum Erzeugen, mit einer Zeitverschiebung, einer zweiten Matrix, die mit der ersten Matrix durch einen Korrelationsgrad korreliert ist;
   einen Kombinierer (410) zum Kombinieren der ersten Matrix und der zweiten Matrix, um eine Aktualisierungsmatrix zum Aktualisieren von Vorcodierungsmatrizen an einem Sender zu erhalten.

2. Codebucherzeugervorrichtung (400) gemäß Anspruch 1, bei der eine Mehrzahl von Aktualisierungsmatrizen erzeugt wird, und bei der zum Berechnen unterschiedlicher Aktualisierungsmatrizen ein unterschiedlicher Korrelationsgrad oder eine unterschiedliche erste Matrix und der gleiche Korrelationsgrad verwendet werden.

3. Codebucherzeugervorrichtung (400) gemäß Anspruch 1 oder 2, bei der der Kombinierer (410) zum Verwenden von nur einem Teilsatz einer Kombination der ersten und der zweiten Matrix zum Erzeugen einer Aktualisierungsmatrix angepasst ist.

4. Codebucherzeugervorrichtung (400) gemäß Anspruch 3, bei der der Teilsatz einem Zeilen- oder Spaltenvektor entspricht.

5. Codebucherzeugervorrichtung (400) gemäß einem der Ansprüche 1 bis 4, bei der der Erzeuger (405) zum Erzeugen von Matrizen mit Spaltenvektoren mit einer genormten Größe zwischen 0,5 und 1,5 angepasst ist, oder bei der der Winkel zwischen beliebigen zwei Spaltenvektoren zwischen 45˚ und 135˚ beträgt.

6. Codebucherzeugervorrichtung (400) gemäß einem der Ansprüche 1 bis 4, bei der die Aktualisierungsmatrizen symmetrische oder konjugiert symmetrische Matrizen sind.

7. Codebucherzeugervorrichtung (400) gemäß einem der Ansprüche 1 bis 6, bei der der Erzeuger (405) zum Erzeugen von Matrizen mit orthogonalen oder nahezu orthogonalen Spalten angepasst ist.

8. Codebucherzeugervorrichtung (400) gemäß einem der Ansprüche 1 bis 7, bei der der Erzeuger (405) zum Erzeugen einheitlicher Matrizen oder nahezu einheitlicher Matrizen angepasst ist, wobei die einheitlichen oder nahezu einheitlichen Matrizen orthogonale oder nahezu orthogonale Spalten aufweisen oder die Norm eines Spaltenvektors mit eins oder nahezu eins aufweisen.

9. Codebucherzeugervorrichtung (400) gemäß einem der vorherigen Ansprüche, bei der der Erzeuger (405) zum Erzeugen zufälliger oder pseudozufälliger Matrizen angepasst ist.

10. Codebucherzeugervorrichtung (400) gemäß einem der vorherigen Ansprüche, bei der jede der Aktualisierungsmatrizen einem eindeutigen Aktualisierungsmatrixindex zugeordnet ist.

11. Codebucherzeugervorrichtung (400) gemäß einem der vorherigen Ansprüche, bei der der Erzeuger (405) zum Erzeugen der ersten und der zweiten Matrix in einer derartigen Weise angepasst ist, dass die erhaltene Aktualisierungsmatrix Elemente auf ihrer Diagonalen aufweist, deren gemittelte Größen zumindest zweimal die gemittelte Größe eines beliebigen Elements außerhalb der Diagonalen sind.

12. Codebucherzeugervorrichtung (400) gemäß einem der vorherigen Ansprüche, bei der eine Aktualisierungsmatrix eine Quadratmatrix ist.

13. Codebucherzeugervorrichtung (400) gemäß einem der vorherigen Ansprüche, bei der der Korrelationsgrad einer Schwundeigenschaft eines Funkkanals zugeordnet ist.

14. Codebucherzeugervorrichtung (400) gemäß einem der vorherigen Ansprüche, bei der der Erzeuger (405) zum Erzeugen von Matrizen mit einer Anzahl unterschiedlicher Korrelationsgrade angepasst ist.

15. Codebucherzeugervorrichtung (400) gemäß einem der Ansprüche 1 bis 14, bei der der Erzeuger (405) zum Erzeugen der ersten und der zweiten Matrix basierend auf einem Jakes-Modell angepasst ist.

16. Codebucherzeugervorrichtung (400) gemäß einem der Ansprüche 1 bis 15, bei der der Erzeuger (405) zum Erzeugen der ersten und der zweiten Matrix durch Erzeugen zufälliger Matrizen, auf die eine Matrix-Triangulierungstechnik angewendet wird, angepasst ist.

17. Codebucherzeugervorrichtung (400) gemäß einem der Ansprüche 1 bis 16, bei der der Erzeuger (405) zum Erzeugen der ersten und der zweiten Matrix zur Optimierung einer Kanalkapazität durch mehrere Versuche angepasst ist.

18. Codebucherzeugervorrichtung (400) gemäß einem der Ansprüche 1 bis 17, die ferner eine Einrichtung zum Quantisieren der Aktualisierungsmatrizen aufweist oder der Erzeuger (405) zum Erzeugen quantisierter Matrizen angepasst ist.

19. Codebucherzeugervorrichtung (400) gemäß einem der Ansprüche 1 bis 18, bei der der Kombinierer (410) zum Kombinieren der ersten Matrix und der zweiten Matrix durch Multiplizieren angepasst ist.

20. Verfahren zum Erzeugen einer oder mehrerer Aktualisierungsmatrizen zum Aktualisieren von Vorcodierungsmatrizen an einem Sender, der in einem Vorcodierungsschema verwendet werden soll, mit einem Sendeschema mit einer ersten Anzahl von Sendeantennen und einer zweiten Anzahl von Empfangsantennen, wobei die erste Anzahl größer als eins ist und die zweite Anzahl größer oder gleich eins ist, das folgende Schritte aufweist:

Berechnen jeder Aktualisierungsmatrix durch:

Erzeugen einer ersten Matrix;
Erzeugen, mit einer Zeitverschiebung, einer zweiten Matrix, die mit der ersten Matrix durch einen Korrelationsgrad korreliert ist;

Kombinieren der ersten Matrix und der zweiten Matrix, um eine Aktualisierungsmatrix zum Aktualisieren von Vorcodierungsmatrizen an einem Sender zu erhalten.

21. Computerprogramm mit einem Programmcode, der angepasst ist, um das Verfahren gemäß Anspruch 20 durchzuführen, wenn das Programm auf einem Computer läuft.

22. Codebuch mit zumindest zwei Aktualisierungsmatrizen zum Aktualisieren von Vorcodierungsmatrizen an einem Sender, der bei einer Vorcodierungsoperation verwendet werden soll, wobei jede Aktualisierungsmatrix einem Aktualisierungsmatrixindex zugeordnet ist, wobei die Aktualisierungsmatrizen durch Erzeugen einer ersten Matrix, Erzeugen, mit einer Zeitverschiebung, einer zweiten Matrix, die mit der ersten Matrix durch einen Korrelationsgrad korreliert ist, und Kombinieren der ersten Matrix und der zweiten Matrix, um eine Aktualisierungsmatrix zu erhalten, berechnet werden, wobei zum Berechnen unterschiedlicher Aktualisierungsmatrizen ein unterschiedlicher Korrelationsgrad oder eine unterschiedliche erste Matrix und der gleiche Korrelationsgrad verwendet werden.

**23.** Speichermedium, auf dem das Codebuch gemäß Anspruch 22 gespeichert ist.

**24.** Speichermedium gemäß Anspruch 23, bei dem das Codebuch in einer quantisierten Weise gespeichert ist.

**25.** Speichermedium gemäß einem der Ansprüche 23 oder 24, das in einer Empfängervorrichtung zum Steuern einer Vorcodierungsoperation in einem Sender innerhalb eines Sendeschemas mit einer ersten Anzahl von Sendeantennen und einer zweiten Anzahl von Empfangsantennen, wobei die erste Anzahl größer als eins ist und die zweite Anzahl größer oder gleich eins ist, implementiert ist, das einen Kanalschätzer zum Schätzen eines Funkkanals zwischen der Sender- und der Empfängervorrichtung basierend auf einem empfangenen Signal, um einen Funkkanalschätzwert zu bestimmen, und eine Verarbeitungseinheit zum Bereitstellen möglicher neuer Vorcodierungsmatrizen basierend auf den Aktualisierungsmatrizen, die in dem Aktualisierungsmatrizencodebuch gespeichert sind, und einer alten Vorcodierungsmatrix, wobei die Aktualisierungsmatrix zumindest zwei Zeilen und zumindest zwei Spalten aufweist, und einen Sucher zum Suchen einer neuen Vorcodierungsmatrix zum Erfüllen eines Optimierungskriteriums basierend auf einem Funkkanalschätzwert unter den möglichen neuen Vorcodierungsmatrizen und eine Sendeeinheit zum Senden des Aktualisierungsmatrixindex, der der neuen Vorcodierungsmatrix zugeordnet ist, aufweist.

**26.** Speichermedium gemäß einem der Ansprüche 23 oder 24, das in einer Sendervorrichtung zum Senden eines vorcodierten Signals implementiert ist, wobei das Signal unter Verwendung einer aktualisierten Vorcodierungsmatrix innerhalb eines Sendeschemas mit einer ersten Anzahl von Sendeantennen und einer zweiten Anzahl von Empfangsantennen, wobei die erste Anzahl größer als eins ist und die zweite Anzahl größer oder gleich eins ist, vorcodiert wird, das eine Empfangseinheit zum Empfangen eines empfangenen Aktualisierungsindex, eine Speichereinrichtung zum Speichern eines Codebuchs mit unterschiedlichen Aktualisierungsinformationsgegenständen, wobei jedem Aktualisierungsinformationsgegenstand ein Aktualisierungsindex zugeordnet ist, einen Aktualisierungsmatrixerzeuger zum Erzeugen einer Aktualisierungsmatrix mit zumindest zwei Zeilen und zumindest zwei Spalten unter Verwendung des empfangenen Aktualisierungsindex und des zugeordneten Aktualisierungsinformationsgegenstands von dem Codebuch mit den unterschiedlichen Aktualisierungsinformationsgegenständen und einen Kombinierer zum Kombinieren einer früher verwendeten Vorcodierungsmatrix und der Aktualisierungsmatrix, um die aktualisierte Vorcodierungsmatrix zu erhalten, aufweist.

**27.** Speichermedium gemäß einem der Ansprüche 23 bis 25, das in einer Empfängervorrichtung zum Bereitstellen von Vorcodierungsinformationen implementiert ist, das einen Detektor zum Erfassen eines Ereignisses, eine Sendeeinheit zum Senden absoluter Vorcodierungsinformationen zu einem ersten Zeitpunkt ansprechend auf ein erfasstes Auftreten des Ereignisses und zum Senden differentieller Vorcodierungsinformationen zu einem zweiten Zeitpunkt, der sich von dem ersten Zeitpunkt unterscheidet, aufweist.

**28.** Speichermedium gemäß Anspruch 27, bei dem der Detektor zum Erfassen eines Zeitablaufs einer vordefinierten Periode seit einem früheren Zeitpunkt, zu dem die absoluten Vorcodierungsinformationen gesendet wurden, als das Ereignis oder einer Situation, bei der die absoluten Vorcodierungsinformationen für eine Kommunikationsverbindung vorteilhafter ist als eine differenzielle Vorcodierungsinformation, als das Ereignis angepasst ist.

**29.** Speichermedium gemäß Anspruch 26, das in einer Sendervorrichtung implementiert ist, die zum Senden eines Signals unter Verwendung von Vorcodierung angepasst ist, wobei die Vorcodierung über eine Vorcodierungsinformation aktualisiert wird, das einen Detektor zum Erfassen eines Auftretens eines Ereignisses und eine Einrichtung zum Aktualisieren mit den absoluten Vorcodierungsinformationen zu einem ersten Zeitpunkt ansprechend auf ein erfasstes Auftreten des Ereignisses und zum Aktualisieren der differentiellen Vorcodierungsinformationen zu einem zweiten Zeitpunkt, der sich von dem ersten Zeitpunkt unterscheidet, aufweist.

**30.** Speichermedium gemäß Anspruch 29, bei dem der Detektor zum Erfassen eines Zeitablaufs einer vordefinierten Periode seit einem früheren Zeitpunkt, zu dem die absolute Vorcodierungsinformation empfangen wurden, als das Ereignis oder einer Situation, in der die absoluten Vorcodierungsinformationen für eine Kommunikationsverbindung vorteilhafter sind als die differentiellen Vorcodierungsinformationen, als das Ereignis angepasst ist.

**Revendications**

**1.** Dispositif générateur de table de codage (400) destiné à générer une table de codage, comprenant une ou plusieurs matrices de mise à jour destinées à mettre à jour les matrices de précodage à l'émetteur destinées à être utilisées

**EP 1 919 097 B1**

dans un schéma de précodage avec un schéma d'émission présentant un premier nombre d'antennes d'émission et un deuxième nombre d'antennes de réception, le premier nombre étant supérieur à un et le deuxième nombre étant supérieur ou égal à un, calculer chaque matrice de mise à jour, comprenant

un générateur (405) destiné à générer une première matrice et à générer avec un décalage dans le temps une deuxième matrice corrélée avec la première matrice par un degré de corrélation;

un combineur (410) destiné à combiner la première matrice et la deuxième matrice, pour obtenir une seule matrice de mise à jour destinée à mettre à jour les matrices de précodage à l'émetteur.

**2.** Dispositif générateur de table de codage (400) selon la revendication 1, dans lequel sont générées une pluralité de matrices de mise à jour et dans lequel est utilisé, pour le calcul de matrices de mise à jour différentes, un degré de corrélation différent ou une première matrice différente et le même degré de corrélation.

**3.** Dispositif générateur de table de codage (400) selon la revendication 1 ou 2, dans lequel le combineur (410) est adapté pour n'utiliser qu'un sous-ensemble d'une combinaison de la première et de la deuxième matrice pour générer une matrice de mise à jour.

**4.** Dispositif générateur de table de codage (400) selon la revendication 3, dans lequel le sous-ensemble correspond à une rangée ou à un vecteur de colonne.

**5.** Dispositif générateur de table de codage (400) selon l'une des revendications 1 à 4, dans lequel le générateur (405) est adapté pour générer des matrices à vecteurs de colonne ayant une amplitude normalisée comprise entre 0,5 et 1,5, ou dans lequel l'angle entre deux vecteurs de colonne quelconques est compris entre 45˚ et 135˚.

**6.** Dispositif générateur de table de codage (400) selon l'une des revendications 1 à 4, dans lequel les matrices de mise à jour sont des matrices symétriques ou symétriques conjuguées.

**7.** Dispositif générateur de table de codage (400) selon l'une des revendications 1 à 6, dans lequel le générateur (405) est adapté pour générer des matrices ayant des colonnes orthogonales ou pratiquement orthogonales.

**8.** Dispositif générateur de table de codage (400) selon l'une des revendications 1 à 7, dans lequel le générateur (405) est adapté pour générer des matrices unitaires ou des matrices pratiquement unitaires, les matrices unitaires ou pratiquement unitaires ayant des colonnes orthogonales ou pratiquement orthogonales ou ayant la norme d'un vecteur de colonne qui est un ou pratiquement un.

**9.** Dispositif générateur de table de codage (400) selon l'une des revendications précédentes, dans lequel le générateur (405) est adapté pour générer des matrices aléatoires ou pseudo-aléatoires.

**10.** Dispositif générateur de table de codage (400) selon l'une des revendications précédentes, dans lequel chacune des matrices de mise à jour est associée à un indice de matrice de mise à jour unique.

**11.** Dispositif générateur de table de codage (400) selon l'une des revendications précédentes, dans lequel le générateur (405) est adapté pour générer la première et la deuxième matrice de sorte que la matrice de mise à jour obtenue présente des éléments sur sa diagonale dont les amplitudes moyennes sont d'au moins deux fois l'amplitude moyenne de tout élément hors diagonale.

**12.** Dispositif générateur de table de codage (400) selon l'une des revendications précédentes, dans lequel une matrice de mise à jour est une matrice carrée.

**13.** Dispositif générateur de table de codage (400) selon l'une des revendications précédentes, dans lequel le degré de corrélation est associé à une propriété d'évanouissement d'un canal de radiocommunication.

**14.** Dispositif générateur de table de codage (400) selon l'une des revendications précédentes, dans lequel le générateur (405) est adapté pour générer des matrices avec un nombre de degrés de corrélation différents.

**15.** Dispositif générateur de table de codage (400) selon l'une des revendications 1 à 14, dans lequel le générateur (405) est adapté pour générer les première et deuxième matrices sur base d'un modèle de Jakes.

**16.** Dispositif générateur de table de codage (400) selon l'une des revendications 1 à 15, dans lequel le générateur (405) est adapté pour générer les première et deuxième matrices en générant des matrices aléatoires auxquelles est appliquée une technique de triangularisation de matrices.

17. Dispositif générateur de table de codage (400) selon l'une des revendications 1 à 16, dans lequel le générateur (405) est adapté pour générer les première et deuxième matrices pour optimiser une capacité de canal par plusieurs essais.

18. Dispositif générateur de table de codage (400) selon l'une des revendications 1 à 17, comprenant par ailleurs un moyen pour quantifier les matrices de mise à jour ou le générateur (405) étant adapté pour générer des matrices quantifiées.

19. Dispositif générateur de table de codage (400) selon l'une des revendications 1 à 18, dans lequel le combineur (410) est adapté pour combiner la première matrice et la deuxième matrice par multiplication.

20. Procédé pour générer une ou plusieurs matrices de mise à jour destinées à mettre à jour les matrices de précodage à l'émetteur destinées à être utilisées dans un schéma de précodage avec un schéma d'émission ayant un premier nombre d'antennes d'émission et un deuxième nombre d'antennes de réception, le premier nombre étant supérieur à un et le deuxième nombre étant supérieur ou égal à un, comprenant

calculer chaque matrice de mise à jour en

générant une première matrice;
générant avec un décalage dans le temps une deuxième matrice corrélée avec la première matrice par un degré de corrélation;

combiner la première matrice et la deuxième matrice, pour obtenir une seule matrice de mise à jour destinée à mettre à jour les matrices de précodage à l'émetteur.

21. Programme d'ordinateur ayant un code de programme adapté pour réaliser le procédé selon la revendication 20 lorsque le programme est exécuté sur un ordinateur.

22. Table de codage ayant au moins deux matrices de mise à jour destinées à mettre à jour les matrices de précodage à l'émetteur destinées à être utilisées dans une opération de précodage, chaque matrice de mise à jour étant associée à un indice de matrice de mise à jour, les matrices de mise à jour étant calculées en générant une première matrice, en générant avec un décalage dans le temps une deuxième matrice corrélée avec la première matrice par un degré de corrélation et en combinant la première matrice et la deuxième matrice, pour obtenir une seule matrice de mise à jour, où il est utilisé, pour le calcul de matrices de mise à jour différentes, un degré de corrélation différent ou une première matrice différente et le même degré de corrélation.

23. Support de mémoire ayant y mémorisée la table de codage selon la revendication 22.

24. Support de mémoire selon la revendication 23, ayant la table de codage mémorisée de manière quantifiée.

25. Support de mémoire selon l'une des revendications 23 ou 24, mis en oeuvre dans un appareil récepteur pour commander une opération de précodage dans un émetteur dans un schéma d'émission ayant un premier nombre d'antennes d'émission et un deuxième nombre d'antennes de réception, le premier nombre étant supérieur à un et le deuxième nombre étant supérieur ou égal à un, comprenant un estimateur de canal destiné à estimer un canal de radiocommunication entre l'appareil émetteur et l'appareil récepteur sur base d'un signal reçu, pour déterminer une estimation de canal de radiocommunication, et une unité de traitement destinée à fournir de possibles nouvelles matrices sur base des matrices de mise à jour mémorisées dans la table de codage de matrices de mise à jour et d'une ancienne matrice de précodage, la matrice de mise à jour ayant au moins deux rangées et au moins deux colonnes, et un chercheur destiné à chercher une nouvelle matrice de précodage, pour remplir un critère d'optimisation sur base d'une estimation de canal de radiocommunication parmi les possibles nouvelles matrices de précodage, et une unité d'émission destinée à émettre l'indice de matrice de mise à jour qui est associé à la nouvelle matrice de précodage.

26. Support de mémoire selon l'une des revendications 23 ou 24, mis en oeuvre dans un appareil émetteur pour émettre un signal précodé, le signal étant précodé à l'aide d'une matrice de précodage mise à jour dans un schéma d'émission ayant un premier nombre d'antennes d'émission et un deuxième nombre d'antennes de réception, le premier nombre étant supérieur à un et le deuxième nombre étant supérieur ou égal à un, comprenant une unité de réception destinée à recevoir un indice de mise à jour reçu, un support de mémoire destiné à mémoriser une table de codage présentant des informations de mise à jour différentes, chaque information de mise à jour ayant y associé un indice de mise à jour, un générateur de matrice de mise à jour destiné à générer une matrice de mise à jour ayant au moins deux rangées et au moins deux colonnes à l'aide de l'indice de mise à jour reçu et de l'information de mise à jour associée de la table de codage ayant les différentes informations de mise à jour, et un combineur destiné à combiner une matrice de précodage utilisée antérieurement et la matrice de mise à jour, pour obtenir la matrice de précodage mise à jour.

27. Support de mémoire selon l'une des revendications 23 à 25, mis en oeuvre dans un appareil récepteur pour fournir des informations de précodage, comprenant un détecteur destiné à détecter un événement, une unité d'émission destinée à émettre des informations de précodage absolues à un premier moment en réponse à une occurrence détectée de l'événement et à émettre des informations de précodage différentielles à un deuxième moment différent du premier moment.

28. Support de mémoire selon la revendication 27, dans lequel le détecteur est adapté pour détecter, comme événement, un écoulement d'une période prédéfinie depuis un moment antérieur auquel ont été envoyées les informations de précodage absolues ou, comme événement, une situation dans laquelle les informations de précodage absolues sont plus avantageuses pour une liaison de communication qu'une information de précodage différentielle.

29. Support de mémoire selon la revendication 26, mis en oeuvre dans un appareil émetteur adapté pour émettre un signal à l'aide d'un précodage, le précodage étant mis à jour sur une information de précodage, comprenant un détecteur destiné à détecter une occurrence d'un événement, et un moyen destiné à mettre à jour par les informations de précodage absolues à un premier moment en réponse à une occurrence détectée de l'événement et à mettre à jour les informations de précodage différentielles à un deuxième moment différent du premier moment.

30. Support de mémoire selon la revendication 29, dans lequel le détecteur est adapté pour détecter, comme événement, un écoulement d'une période prédéfinie depuis un moment antérieur auquel ont été reçues les informations de précodage absolues ou, comme événement, une situation dans laquelle les informations de précodage absolues sont plus avantageuses pour une liaison de communication que les informations de précodage différentielles.

EP 1 919 097 B1

Precoding
Matrix
Memory

124

Channel
Estimator

Processing Unit

Codebook

122

110

120

100

Transmit
Unit

Searcher

140

130

FIG 1

FIG 2

EP 1 919 097 B1

Combiner

Precoding
Matrix
Memory

245

240

Receive
Unit

Update Matrix
Generator

Storage
Means

210

230

220

200

FIG 3

EP 1 919 097 B1

260

Memory of Previous Precoding Matrix

$F_{k-1}$

265

$\otimes$

$F_k$

$C_{m_{opt}}$

CB

$m_{opt}$

255

250

Left Right

$$F_k = C_{m_{opt}} F_{k-1}$$

# FIG 4

**FIG 5**

EP 1 919 097 B1

EP 1 919 097 B1

Generator

Combiner

405

410

400

FIG 6

EP 1 919 097 B1

420

Random unitary matrix → V (t)

440

Δt → Time shifted Random unitary matrix → V (t+Δt)

430

$$G = V(t)V(t+\Delta t)^{H} \equiv C_{m} = \begin{bmatrix} g_{11} & e_{12} & \cdots & e_{1N_t} \\ e_{21} & g_{22} & \cdots & e_{2N_t} \\ \vdots & \vdots & \ddots & \vdots \\ e_{N_t1} & e_{N_t2} & \cdots & g_{N_tN_t} \end{bmatrix}$$

FIG 7

EP 1 919 097 B1

```
for m = 1: B
451. Generate $N_t \times N_t$ random matrix $Q(t)$, $Q(t+\Delta t_m)$
452. Compute SVD
         $Q(t) = U(t)D(t)V(t)^H$
         $Q(t+\Delta t_m) = U(t+\Delta t_m)D(t+\Delta t_b)V(t+\Delta t_m)^H$
453. Define $C_m = V(t)V(t+\Delta t_m)^H$
end
```

**FIG 8A**

Capacity/b/(s Hz)

FIG 8B

EP 1 919 097 B1

EP 1 919 097 B1

Detector

Transmit
Unit

710

720

700

**FIG 9**

FIG 10

Means
for
Updating

820

Detector

810

FIG 11

800

EP 1 919 097 B1

FIG 12

|  | Transmitter | Receiver |
|---|---|---|
| One-Shot | $C_1 = \begin{bmatrix} \phantom{x} \end{bmatrix} \Rightarrow \begin{bmatrix} \phantom{x} \end{bmatrix} \equiv F_k$ <br><br> $\xrightarrow{\text{Feedback}} P_{opt} = (2,4)\ (e.g,\ N_t = 4\ case\ )$ | Feedback <br> $\leftarrow (P_{opt}) = \underset{p}{\arg\max}\ Capacity\ (H, \sigma^2, \{C_1\})$ <br> $P_{opt} = $ Preferable column subset <br><br> $C_1 = \begin{bmatrix} \phantom{x} \end{bmatrix} \Rightarrow \begin{bmatrix} \phantom{x} \end{bmatrix} \equiv F_k$ <br> $P_{opt} = (2,4)\ (e.g,\ N_t = 4\ case\ )$ |
| Tracking | $F_k = C_{m_{opt}} F_{k-1}$ <br><br> Feedback $\longrightarrow$ | $\{C'_2 \cdots C'_B\} = \{C_2 F_{k-1} \cdots C_B F_{k-1}\}$ <br> $\leftarrow m_{opt} = \underset{m}{\arg\max}\ Capacity\ (H, \sigma^2, \{C'_m\})$ <br> Feedback |

## FIG 13

EP 1 919 097 B1

EP 1 919 097 B1

$1400$ ～ $x, y_1, \ldots, y_k$

Indicator
Tracking/One-Shot

CB/column
subset

Example
$Nt = 4, B = 17$

⟹

One-Shot
↓
(1 0) 1 0 1 ～ 1410
↑
Column-subset index in $C_1$

Tracking
↓
(0 0) 0 1 1 ～ 1420
↑
CB index from $C_2$ to $C_{17}$

# FIG 14

FIG 15

EP 1 919 097 B1

FIG 16A

FIG 16B

EP 1 919 097 B1

Feedback (FB): Preferable CB index: $m_{opt}$

1740 {$C_1 C_2 \cdots C_B$}

1740 Code Book

{$C_1 C_2 \cdots C_B$}

$S_k$ → Precoder $x_k = F_k s_k$ 1730 → $X_k$ → Tx 1710

1712 1

$N_t$

1712

$H_k$ 1760

1 1722

$N_r$

1722

Rx 1720

Detector

1750

**FIG 17** (State of the art)

FIG 18 (State of the art)

FIG 19 (State of the art)

CB —2020

$m_{1opt}$

$m_{Nsopt}$

Matrix
Constructor

$\widetilde{D}_k$

⊗ → $F_k$

2050

2010

Memory of
Previous
Precoding
Matrix

$F_{k-1}$

Column
adder

2040

2030

2000

FIG 20 (State of the art)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2006075220 A1

**Non-patent literature cited in the description**

• **Jinho Choi et al.** An Adaptive Technique for Transmit Antenna Diversity With Feedback. *IEEE Transactions on Vehicular Technology,* July 2002, vol. 51